# EUROPEAN PATENT APPLICATION

(11) **EP 4 482 167 A1**
(43) Date of publication of application: **25.12.2024**
(21) Application number: 23756178.2
(22) Date of filing: 02.02.2023
(51) Int. Cl.: H04N 25/70, H04N 25/50, H04N 23/60, H04N 25/65

(54) **IMAGING DEVICE AND SIGNAL PROCESSING METHOD**

(30) Priority: 17.02.2022 JP 2022022697
(71) Applicant: Sony Semiconductor Solutions Corporation, Atsugi-shi, Kanagawa 243-0014 (JP)
(72) Inventor: MASUNO, Tomonori, Atsugi-shi, Kanagawa 243-0014 (JP); UJIIE, Ichiro, Atsugi-shi, Kanagawa 243-0014 (JP); HANADA, Seigo, Atsugi-shi, Kanagawa 243-0014 (JP); ONIKI, Kazumasa, Atsugi-shi, Kanagawa 243-0014 (JP); MATSUMOTO, Nana, Atsugi-shi, Kanagawa 243-0014 (JP); YANG, Ying, Atsugi-shi, Kanagawa 243-0014 (JP); YAMADA, Kazuki, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/003343
(87) International publication number: WO 2023/157651

(57) **Abstract**

The present technique pertains to an image capturing apparatus and a signal processing method that enable power consumption to be lowered for a sensor equipped with a DNN (Deep Neural Network).

The image capturing apparatus performs a DNN (Deep Neural Network) process on image data that is generated by image capturing, outputs a trigger signal for controlling stopping or driving of the DNN process, and, on the basis of the trigger signal, controls stopping of the DNN process or driving of the DNN process and output to a subsequent stage. The present technique can be applied to an image capturing apparatus that is provided with an image sensor which is equipped with a DNN.

## Description

### [Technical Field]

The present technique pertains to an image capturing apparatus and a signal processing method, and particularly pertains to an image capturing apparatus and a signal processing method that enable power consumption to be lowered for a sensor equipped with a DNN (Deep Neural Network).

### [Background Art]

Recently, image sensors that are equipped with a processing unit that can execute a DNN have been provided.

In PTL 1, an image sensor which is equipped with a processing unit that can execute a DNN has a mechanism that enables a frame rate and processing details to be switched, whereby complex processing or recognition is possible.

### [Citation List]

### [Patent Literature]

[PTL 1]
Japanese Patent Laid-open No. 2020-25268

### [Summary]

### [Technical Problem]

However, in a case where a DNN is executed at a high-speed frame rate over a long amount of time in this image sensor, there is a risk of power consumption becoming large.

The present technique is made in light of such circumstances, and enables power consumption to be lowered for a sensor equipped with a DNN.

### [Solution to Problem]

An image capturing apparatus according to one aspect of the present technique is provided with a DNN (Deep Neural Network) processing unit that performs a DNN process on image data generated by image capturing, a trigger unit that outputs a trigger signal for controlling stopping or driving of the DNN process, and a control unit that, on the basis of the trigger signal, controls stopping or driving for the DNN process and output to a subsequent stage.

In one aspect of the present technique, a DNN (Deep Neural Network) process is performed on image data that is generated by image capturing, and a trigger signal for controlling stopping or driving of the DNN process is outputted. Further, stopping of the DNN process or driving of the DNN process and output to a subsequent stage are controlled on the basis of the trigger signal.

### [Brief Description of Drawings]

[FIG. 1]

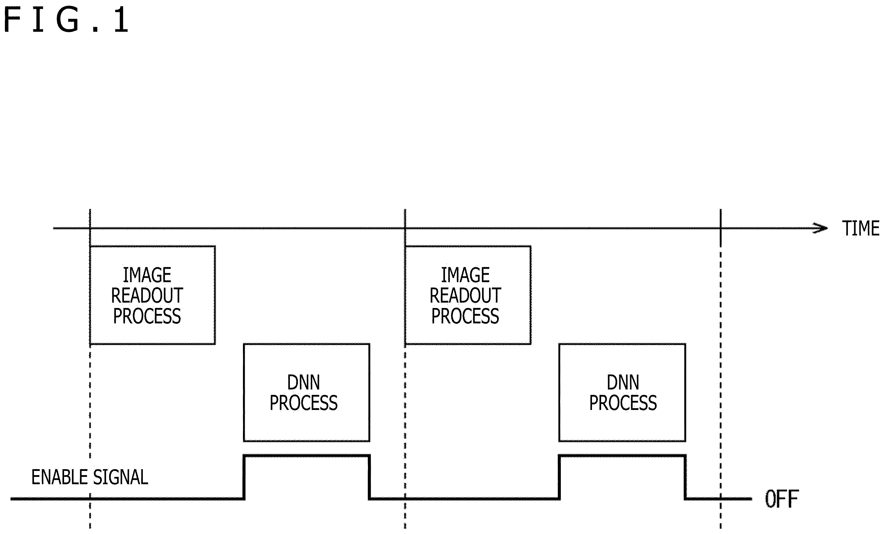

   FIG. 1 is a view for describing a first processing mode for a conventional image sensor.
[FIG. 2]

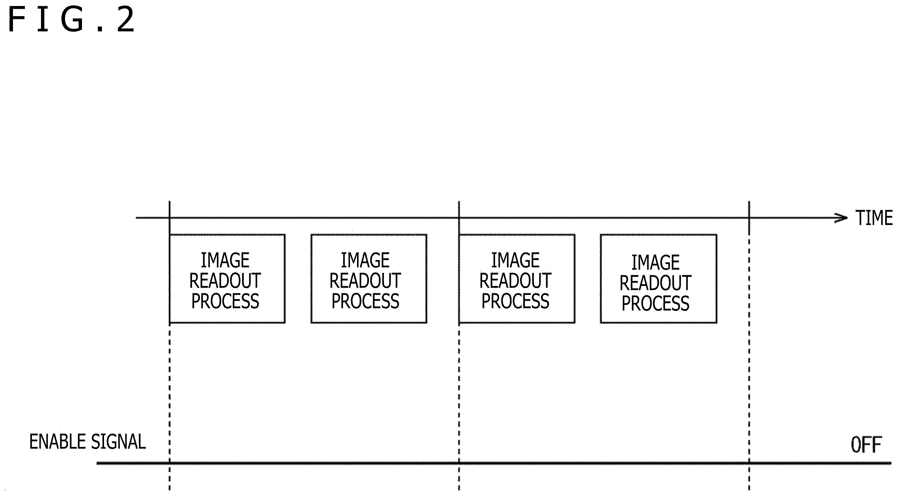

   FIG. 2 is a view for describing a second processing mode for a conventional image sensor.
[FIG. 3]

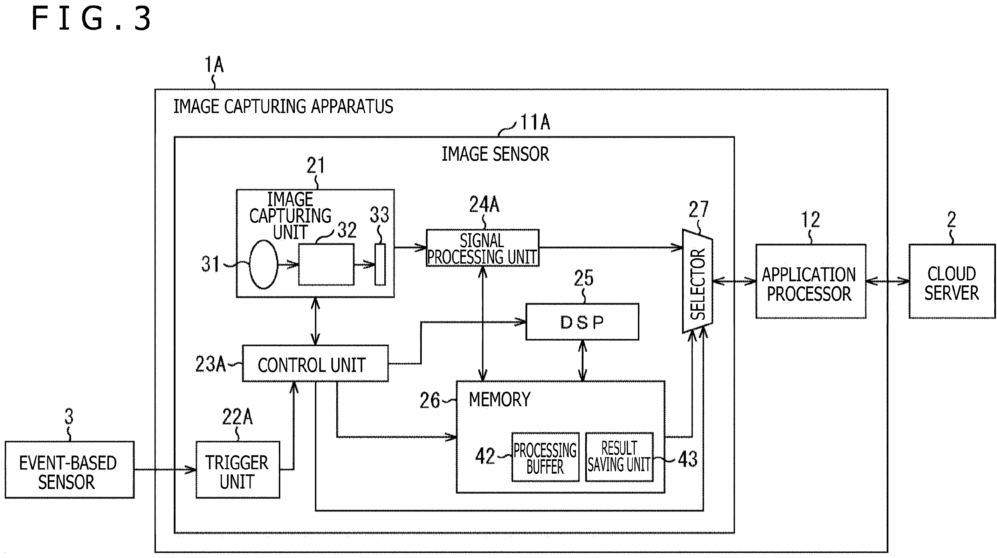

   FIG. 3 is a block view that illustrates a functional configuration of a first embodiment of an image capturing apparatus to which the present technique is applied.
[FIG. 4]

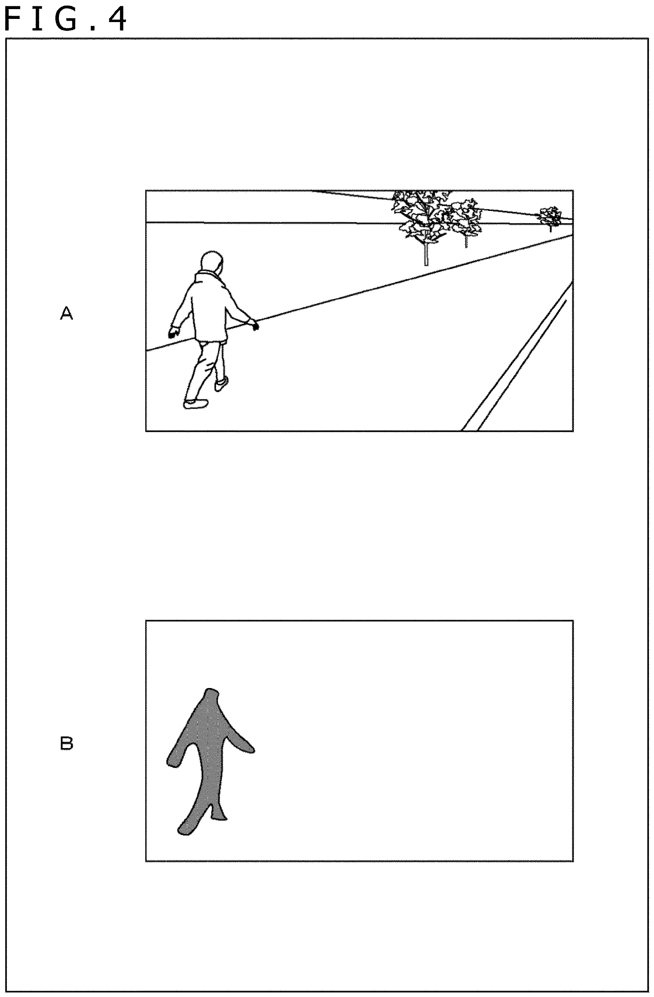

   FIG. 4 is view that illustrate an example of an image processed in the image capturing apparatus in FIG. 3.
[FIG. 5]

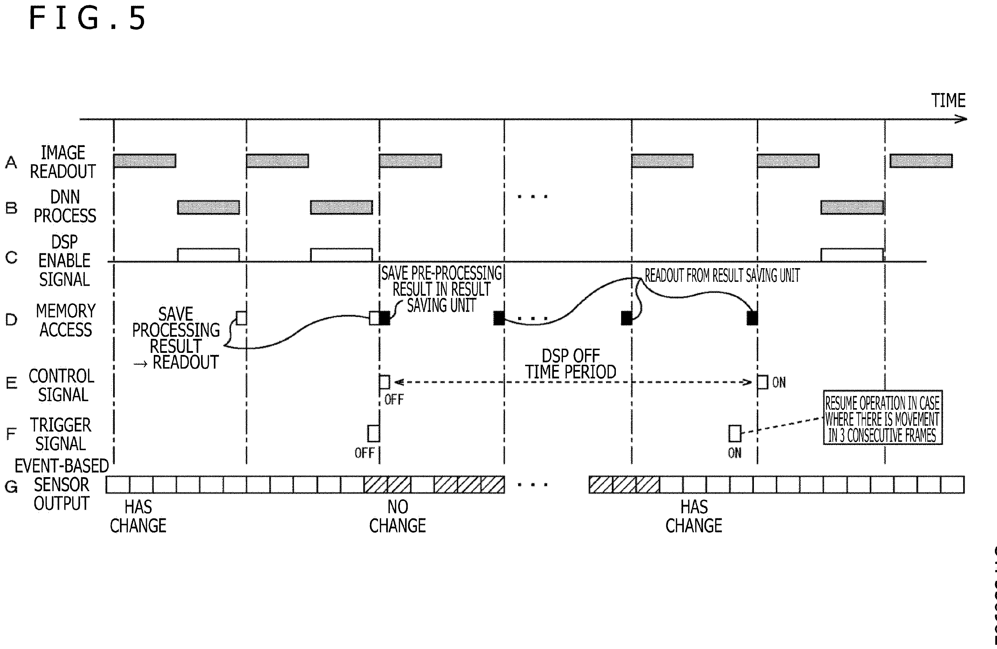

   FIG. 5 is a view that illustrates a timing chart for operation performed by the image capturing apparatus in FIG. 3.
[FIG. 6]

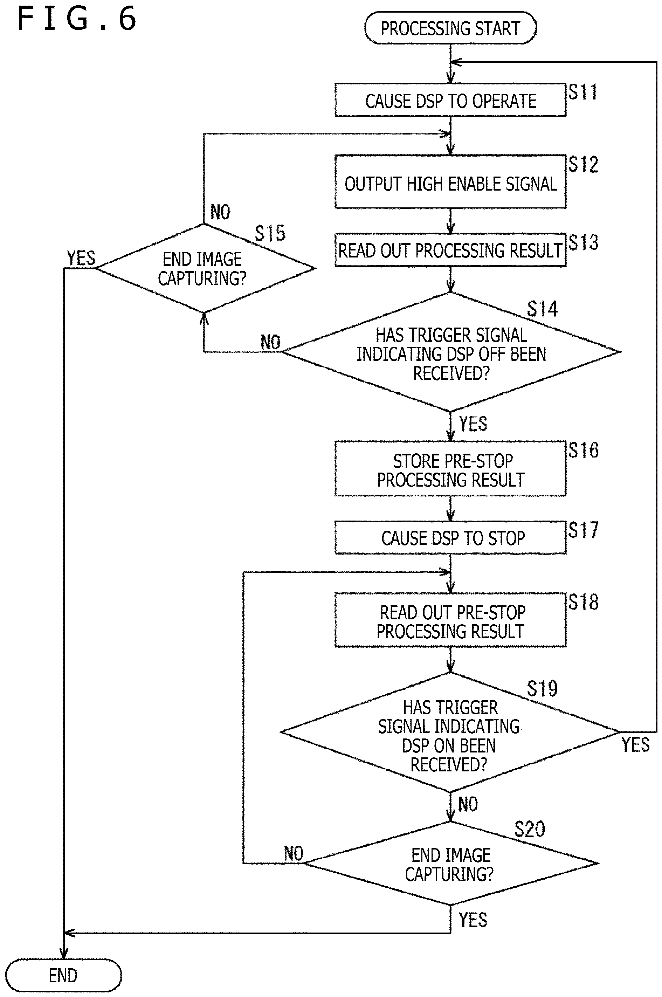

   FIG. 6 is a flow chart for describing processing performed by the image capturing apparatus in FIG. 3.
[FIG. 7]

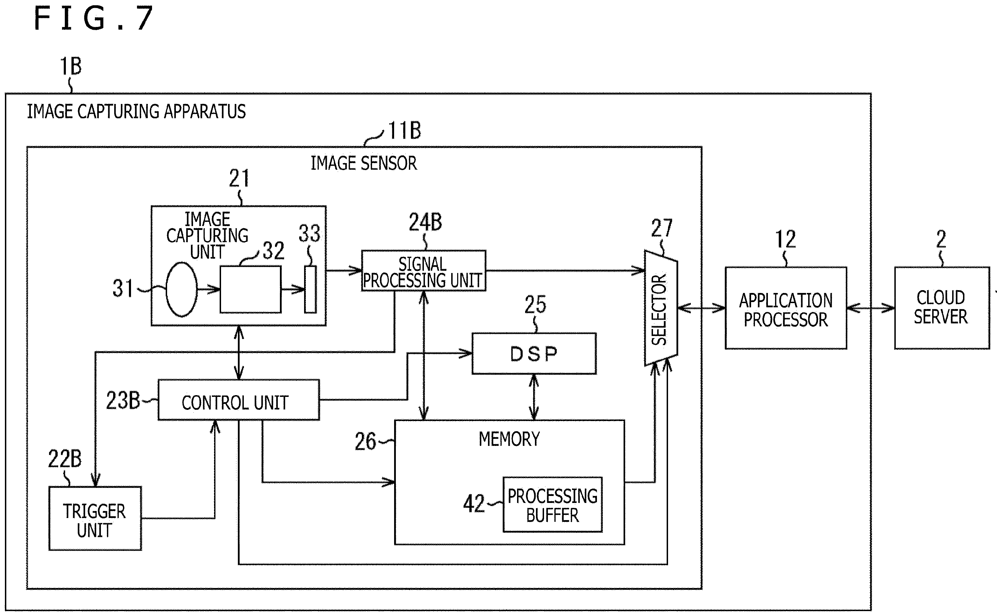

   FIG. 7 is a block view that illustrates a functional configuration of a second embodiment of an image capturing apparatus to which the present technique is applied.
[FIG. 8]

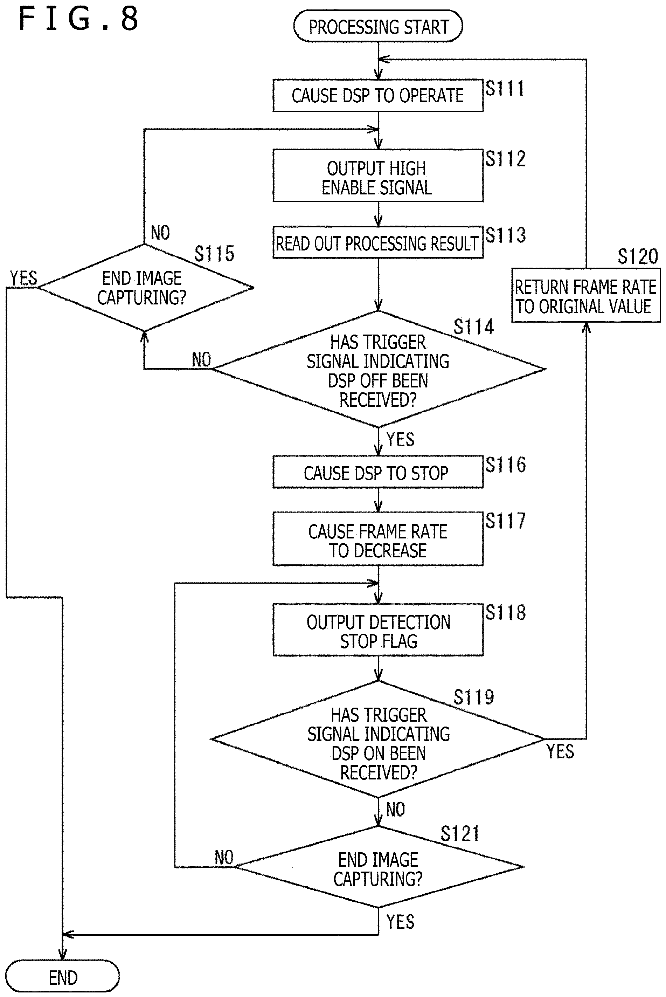

   FIG. 8 is a flow chart for describing processing performed by the image capturing apparatus in FIG. 7.
[FIG. 9]

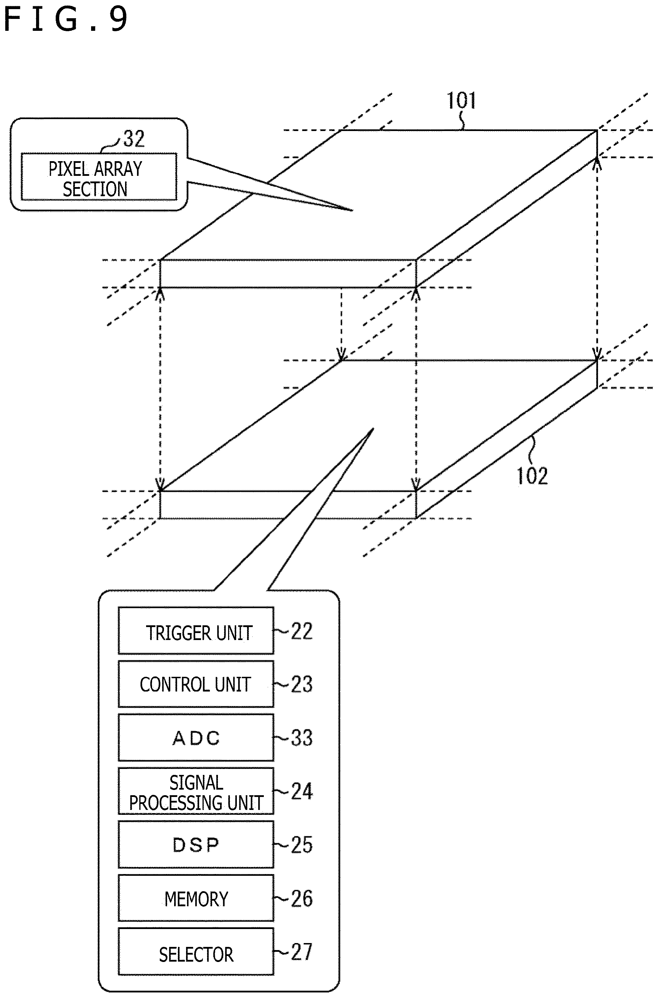

   FIG. 9 is a schematic view that illustrates an example of a configuration of a chip that has a two-layer structure and is for an image sensor according to the present embodiment.
[FIG. 10]

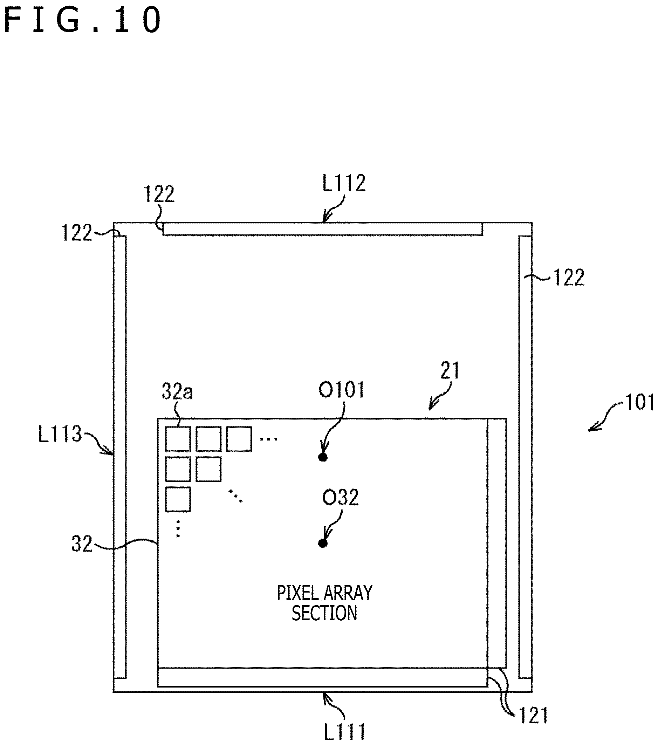

   FIG. 10 illustrates a floor map example for a first substrate of the configuration in FIG. 9.
[FIG. 11]

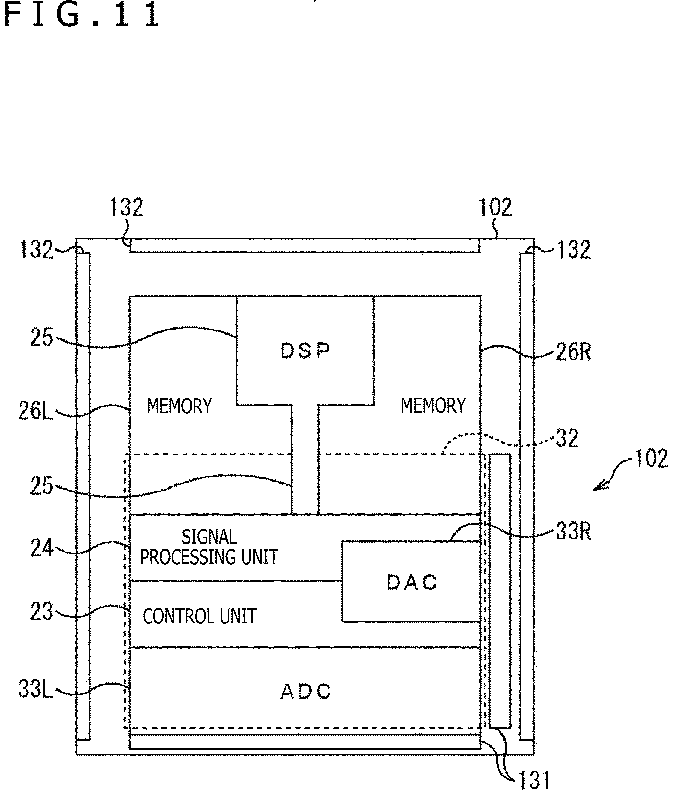

   FIG. 11 illustrates a floor map example for a second substrate of the configuration in FIG. 9.
[FIG. 12]

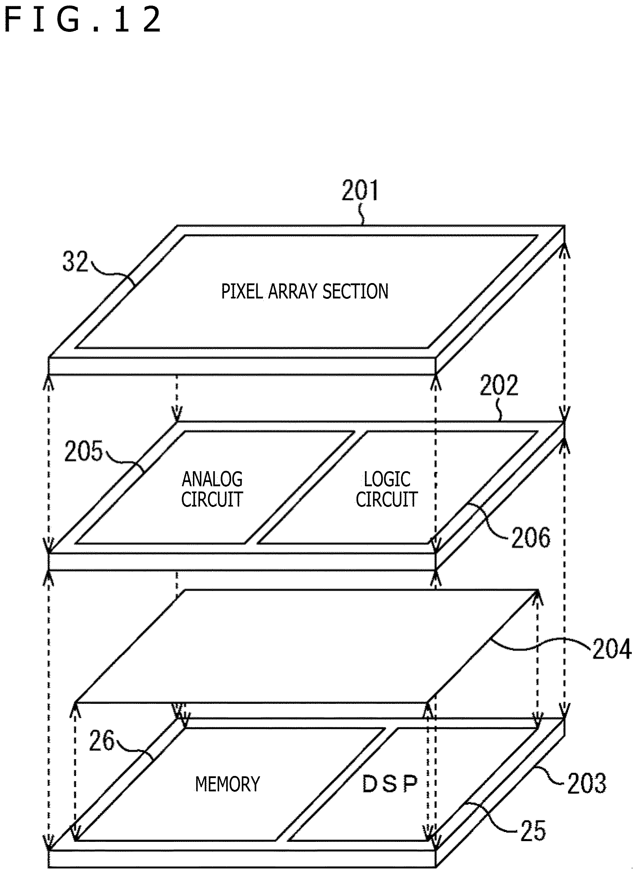

   FIG. 12 is a schematic view that illustrates an example of a configuration of a chip that has a three-layer structure and is for the image sensor according to the present embodiment.
[FIG. 13]

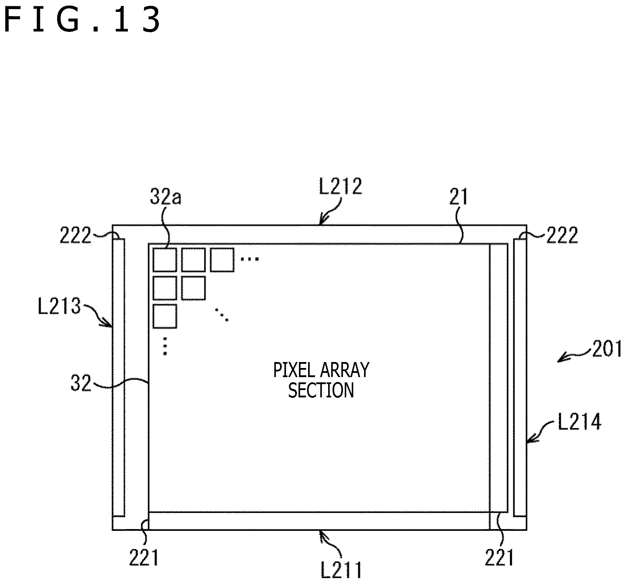

   FIG. 13 illustrates a floor map example for a first substrate of the configuration in FIG. 12.
[FIG. 14]

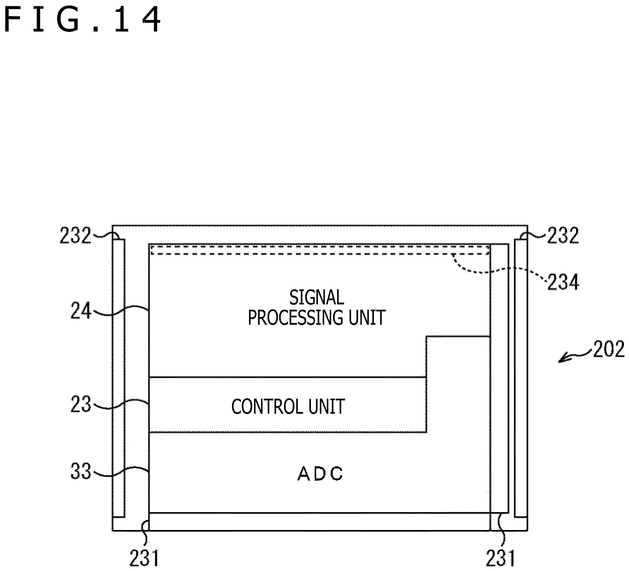

   FIG. 14 illustrates a floor map example for a second substrate of the configuration in FIG. 12.
[FIG. 15]

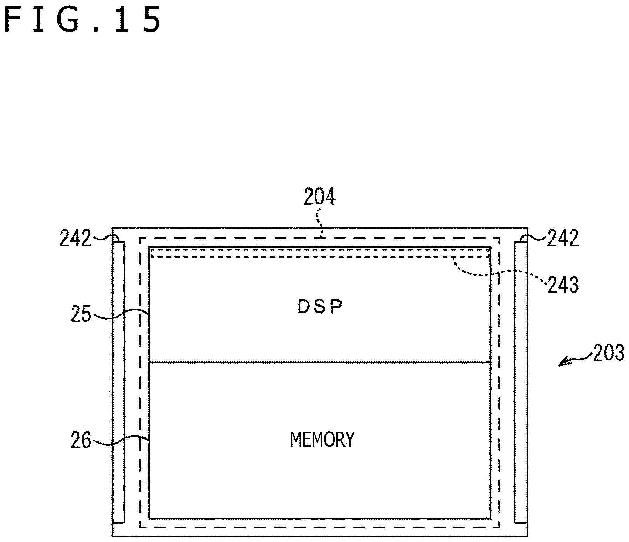

   FIG. 15 illustrates a floor map example for a third substrate of the configuration in FIG. 12.
[FIG. 16]

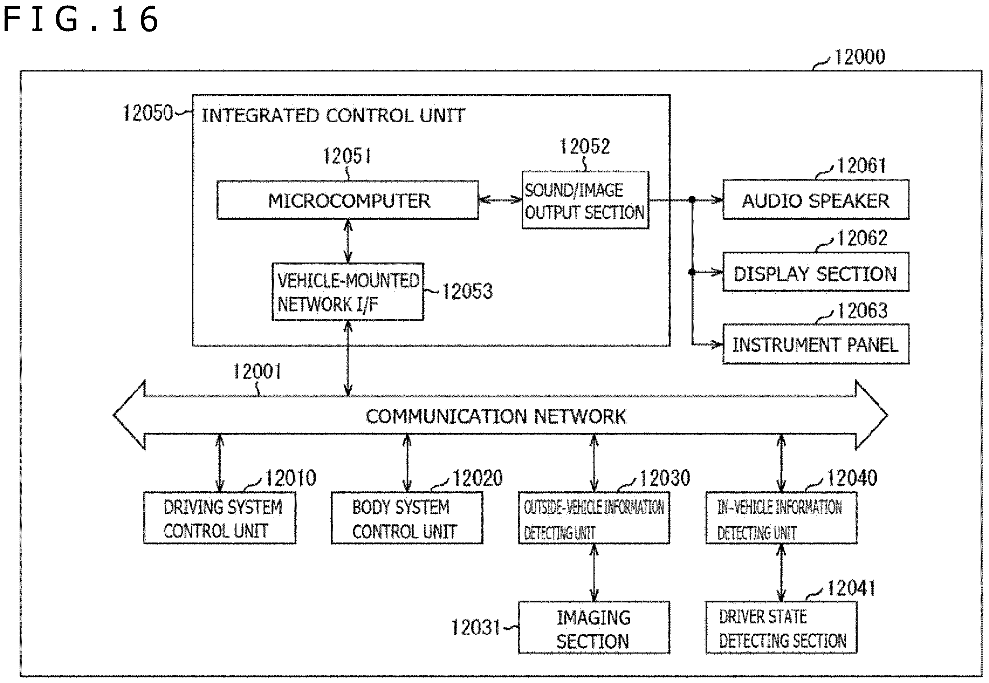

   FIG. 16 is a block diagram depicting an example of schematic configuration of a vehicle control system.
[FIG. 17]

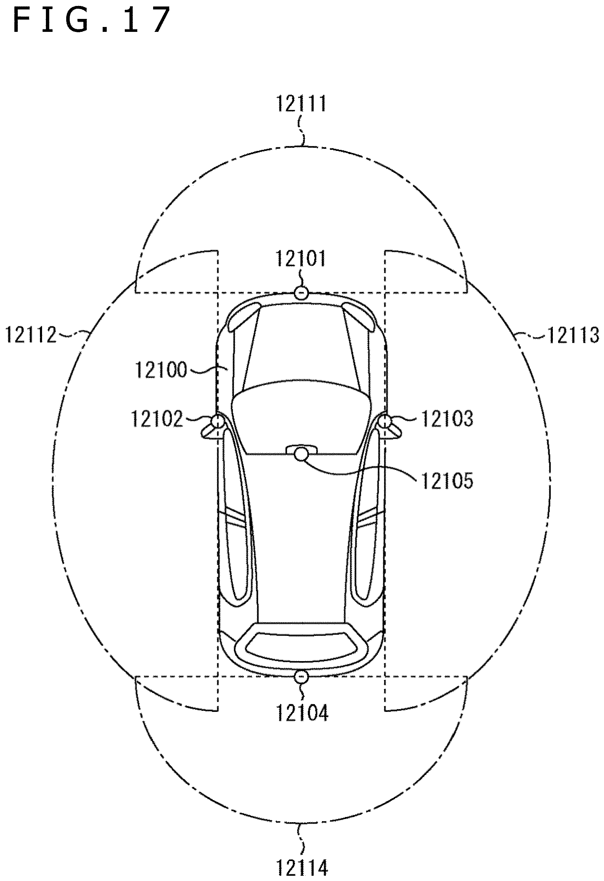

   FIG. 17 is a diagram of assistance in explaining an example of installation positions of an outside-vehicle information detecting section and an imaging section.
[FIG. 18]

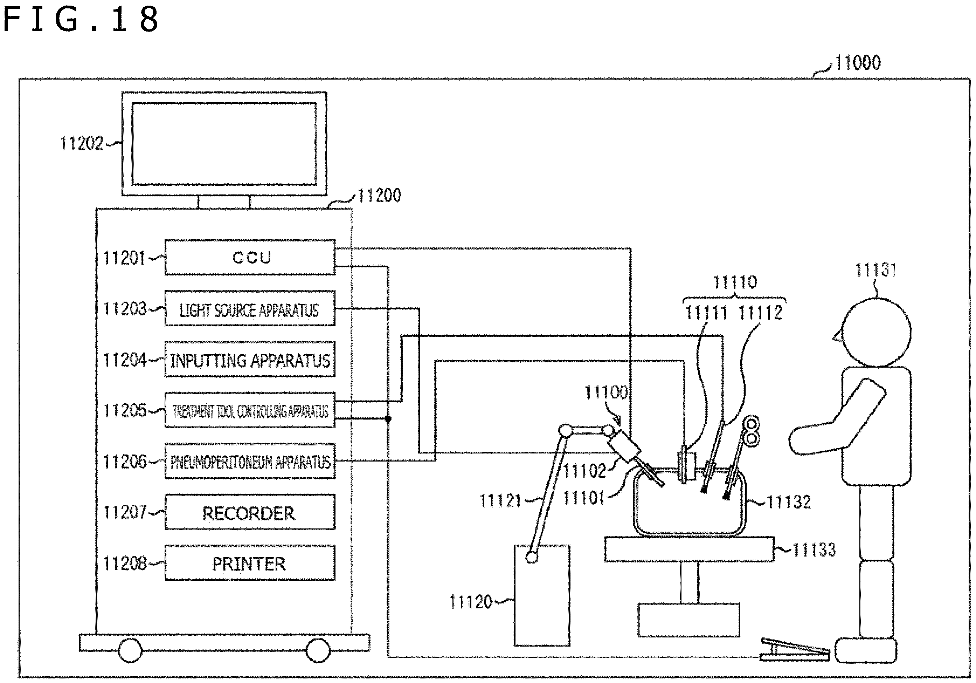

   FIG. 18 is a view depicting an example of a schematic configuration of an endoscopic surgery system.
[FIG. 19]

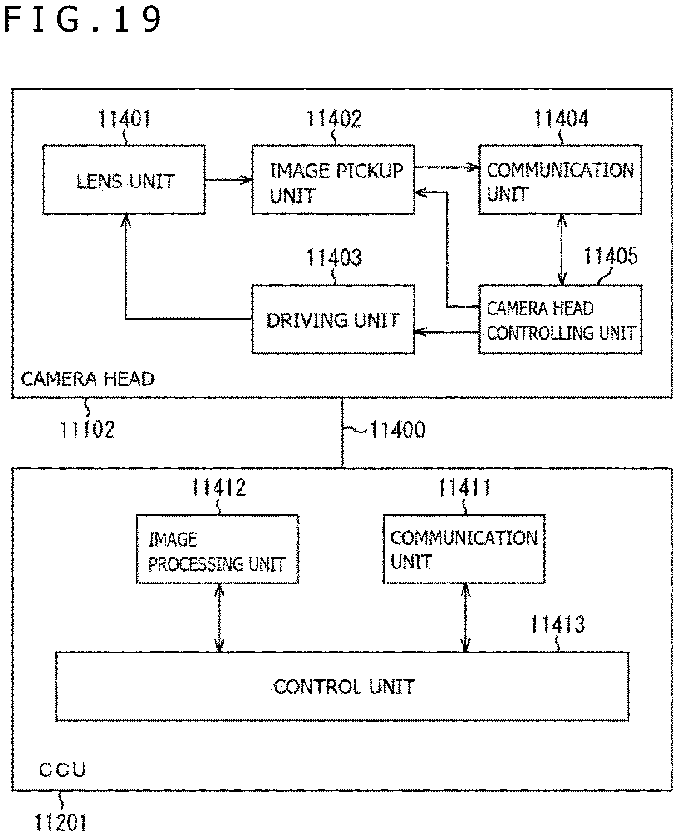

   FIG. 19 is a block diagram depicting an example of a functional configuration of a camera head and a camera control unit (CCU).

### [Description of Embodiments]

Given below is description regarding embodiments for carrying out the present technique. The description presents information in the following order.
1. In the past
2. First embodiment
3. Second embodiment
4. Floor plan
5. Other embodiments
6. Examples of application

### <1. In the past>

### <Operation by conventional image sensor>

PTL 1 describes an image sensor which is equipped with a DSP (Digital Signal Processor) that is a processing unit that can execute a DNN and in which a frame rate and processing details are switched.

FIG. 1 is a view for describing a first processing mode of a conventional image sensor that is described in PTL 1. FIG. 2 is a view for describing a second processing mode for the conventional image sensor.

At timings indicated in FIG. 1, the conventional image sensor causes a DNN process for performing person detection to be operated, as a first processing mode for the DSP. In contrast, in a case where a person is detected, as a second processing mode, the conventional image sensor stops the DNN process and, as illustrated in FIG. 2, reads out an image at high speed, and transfers the image to a subsequent-stage application processor.

For example, the conventional image sensor performs processing in the first processing mode in FIG. 1 at a frame rate of 1 (fps), and performs processing in the second processing mode in FIG. 2 at a frame rate of 30.

In a case where the first processing mode is selected, as illustrated in FIG. 1, while an image readout process from an image capturing unit is being executed, an enable signal is maintained at LOW, and the enable signal is changed to HIGH when the image readout process ends.

The DSP starts a DNN process upon detecting that the enable signal has been changed to HIGH. Subsequently, when the DNN process completes, the enable signal is changed to LOW. As a result, the next image readout process is executed with respect to the image capturing unit.

In addition, as illustrated in FIG. 2, the enable signal is always maintained at LOW while the second processing mode is selected. Therefore, image readout processes from the image capturing unit are sequentially executed according to the frame rate.

For example, switching of the above-described processing modes is applied to a surveillance camera or the like. Specifically, while the enable signal is set to HIGH and the first processing mode illustrated in FIG. 2 is selected, an image is read out from the image capturing unit, and the DSP performs person detection on the image that has been read out. Then, when a person is detected by the DSP, the enable signal is set to LOW, and only a process for reading out an image from the image capturing unit and outputting the image is executed.

By the configuration described above, person detection according to image readout processes and DNN processes is performed until a suspicious person or the like is detected. When a suspicious person is detected, the DNN process is omitted, and only image readout processes are prioritized. Accordingly, the subsequent-stage application processor realizes early detection of a suspicious person and enables motion by a detected suspicious person to be understood, making it possible to realize monitoring of suspicious persons.

However, because operation is always performed in the first mode even in a case where there is no person, a large load is applied to the DSP. In addition, in the second mode, processing by the application processor is always expected regardless of image content, and thus, it is also not possible to reduce power consumption here.

Accordingly, in the present technique, a DNN (Deep Neural Network) process is performed on image data that is generated by image capturing, a trigger signal for controlling stopping or driving of the DNN process is outputted, and stopping of the DNN process or driving of the DNN process and output to a subsequent stage are controlled on the basis of the trigger signal.

As above, a trigger signal can be used to stop a DNN process. Therefore, it is possible to reduce power because an unnecessary DNN process does not need to be performed.

### <2. First embodiment>

### <Functional configuration of image capturing apparatus>

FIG. 3 is a block view that illustrates a functional configuration of a first embodiment of an image capturing apparatus to which the present technique is applied.

In FIG. 3, an image capturing apparatus 1A is communicably connected to each of a cloud server 2 and an event-based sensor 3. Note that the image capturing apparatus 1A is communicably connected to the cloud server 2 and the event-based sensor 3 via, inter alia, various networks or a USB (Universal Serial Bus) cable, regardless of wired communication or wireless communication.

The cloud server 2 is a server apparatus that stores image data, such as a still image or a video that is transmitted from the image capturing apparatus 1A. For example, the cloud server 2 can store image data in freely-defined units, such as for each user, for each date, or for each image capturing location, and can provide various services such as album creation that uses image data.

The event-based sensor 3 is an event-based sensor that can detect a change in luminance of a pixel in a manner that is asynchronous with respect to the image capturing apparatus 1A and that can output data resulting from combining a pixel position (xy coordinates) with time information.

On the basis of a result of detecting a change in luminance of a pixel, the event-based sensor 3 outputs, to the image capturing apparatus 1A, a signal indicating whether or not there is a change in the motion within a captured image.

The image capturing apparatus 1A is an example of an electronic device that has an image sensor 11A and an application processor 12, and, for example, includes a digital camera, a digital video camera, a tablet terminal, a smartphone, or the like. Note that description using an example of capturing an image is given in the embodiments below but there is no limitation to this. Processing can be similarly performed even with a video or the like.

The image sensor 11A is, for example, a CMOS (Complementary Metal Oxide Semiconductor) that is configured by one chip, receives incident light, performs a photoelectric conversion, and outputs, to the application processor 12, image data corresponding to the quantity of incident light received.

The application processor 12 is an example of a processor such as a CPU (Central Processing Unit) that executes various applications. The application processor 12 executes various processes corresponding to applications such as a display process for displaying image data inputted from the image sensor 11A on a display, a biometric authentication process that uses image data, or a transmission process for transmitting image data to the cloud server 2.

Such an image sensor 11A in the image capturing apparatus 1A is equipped with a DSP 25 which is a DNN processing unit that executes a DNN process within the chip, whereby execution of complex processing within the chip is realized.

The image sensor 11A is provided with an image capturing unit 21, a trigger unit 22A, a control unit 23A, a signal processing unit 24A, the DSP 25, a memory 26, and a selector 27.

The image capturing unit 21 is, for example, provided with an optical system 31 that is provided with a zoom lens, a focusing lens, an aperture, or the like and a pixel array section 32 that has a configuration in which unit pixels which include a light-receiving element such as a photodiode are arranged in a two-dimensional matrix. Light that is incident from outside goes through the optical system 31 to thereby form an image on a light-receiving surface on which the light-receiving elements in the pixel array section 32 are arrayed. Each unit pixel in the pixel array section 32 photoelectrically converts light that is incident on the light-receiving element thereof, whereby charge that corresponds to the quantity of received incident light accumulates in a manner that enables the charge to be read out.

In addition, the image capturing unit 21 includes an A/D converter (Analog to Digital Converter; hereinafter referred to as an ADC) 33. The ADC 33 converts an analog pixel signal from each unit pixel read out from the image capturing unit 21 to a digital value to thereby generate digital image data, and outputs the generated image data to the signal processing unit 24A. Note that the ADC 33 may include, inter alia, a voltage generation circuit that generates a drive voltage for driving the image capturing unit 21 from a power supply voltage or the like.

The size of image data outputted by the image capturing unit 21 can be selected from among a plurality of sizes, such as 12 M (3968 × 2976) pixels or a VGA (Video Graphics Array) size (640 × 480 pixels), for example. In addition, regarding image data outputted by the image capturing unit 21, for example, it is possible to select either of an RGB (red, green, blue) color image or a black and white image for only luminance. Such a selection can be made as a type of setting for an image capturing mode.

The trigger unit 22A receives "has change" and "no change" signals from the event-based sensor 3, which is outside of the image capturing apparatus 1A, and, in alignment with a timing of image capturing by the image capturing unit 21, issues a trigger signal that indicates ON or OFF for the DSP 25, and outputs the issued trigger signal to the control unit 23A.

In other words, the trigger unit 22A issues a trigger signal that indicates OFF for the DSP 25, in a case of having received a "no change" signal that is outputted from the event-based sensor 3. Subsequently, the trigger unit 22A issues a trigger signal that indicates ON for the DSP 25, in a case where reception of a "has change" signal outputted from the event-based sensor 3 has continued for a predetermined number of frames for the event-based sensor 3.

The control unit 23A controls each unit within the image sensor 11A according to an operation by a user or an operation mode that has been set, for example.

For example, the control unit 23A monitors an image readout process for reading out an image signal from the image capturing unit 21, and notifies the DSP 25 of the start of a DNN process when the image readout process completes. Specifically, the control unit 23A counts an internal clock and switches an enable signal to thereby control timings for a DNN process and a process for reading out image data from the image capturing unit 21.

In addition, upon receiving a trigger signal, which is issued by the trigger unit 22, at a freely-defined timing, the control unit 23A controls the image capturing unit 21, the DSP 25, the memory 26, or the like in alignment with the next image capturing timing.

For example, in a case where a trigger signal issued by the trigger unit 22 indicates ON for the DSP 25, the control unit 23A causes the DSP 25 to operate, and executes the following processing.

In other words, the control unit 23A outputs a LOW enable signal (in other words, an OFF signal) to the DSP 25 while an image readout process from the image capturing unit 21 is being executed. Then, when the image readout process from the image capturing unit 21 completes, the control unit 23A outputs a HIGH enable signal (in other words, an ON signal) to the DSP 25, and causes the selector 27 to output a result of processing performed by the DSP 25.

Subsequently, in a case where a DNN process by the DSP 25 completes, the control unit 23A outputs a LOW enable signal (in other words, an OFF signal) to the DSP 25.

In contrast, when a trigger signal inputted via the trigger unit 22 indicates OFF for the DSP 25, the control unit 23A, before causing the DSP 25 to stop, causes the memory 26 to save a pre-stop processing result, which is a processing result that the DSP 25 has achieved before being stopped, and subsequently causes the DSP 25 to stop. When the image readout process from the image capturing unit 21 completes, the control unit 23A causes the selector 27 to output the pre-stop processing result which has been saved in the memory 26.

The signal processing unit 24A executes various kinds of signal processing on digital image data that has been read out from the image capturing unit 21 or digital image data that has been read out from the memory 26 (hereinafter referred to as image data to be processed). For example, in a case where image data to be processed is a color image, the signal processing unit 24A converts the format of this image data to YUV image data, RGB image data, or the like.

In addition, for example, the signal processing unit 24A, if necessary, executes processing such as noise removal or white balance adjustment on image data to be processed. In addition, the signal processing unit 24A executes, on the image data to be processed, various kinds of signal processing (also referred to as preprocessing) that will be necessary for the DSP 25 to process this image data.

The DSP 25 functions as a DNN processing unit that executes a program that is stored in the memory 26, for example, to thereby use a trained model, which is created by machine learning using a DNN, to execute various kinds of processing. For example, the DSP 25 executes a computational process based on a trained model that is stored in the memory 26, to thereby execute a process for multiplying image data with a dictionary coefficient that is stored in the memory 26. A result (processing result) obtained by such a computational process is outputted to the memory 26 and (or) the selector 27.

More specifically, with respect to an image corresponding to image data outputted from the signal processing unit 24A (A in FIG. 4), the DSP 25 drives a DNN for extracting a region where a person is present, and outputs a detected image region (B in FIG. 4) as a processing result.

A in FIG. 4 is a view that illustrates an image that corresponds to image data outputted from the signal processing unit 24A. B in FIG. 4 is a view that illustrates a region (processing result) that is detected by a DNN process on the image in A in FIG. 4.

A in FIG. 4 illustrates an image in which a person who is walking along a road toward the back right is present at the front left.

B in FIG. 4 illustrates a region that surrounds the person present at the front left and has been detected by a DNN process with respect to the image in A in FIG. 4.

Note that a processing result can include the image data in which the above-described region is included or various items of information (metadata) obtained from the image data, which are obtained by executing a computational process that uses a trained model.

In addition, the DSP 25 may incorporate a memory controller for controlling access to the memory 26. More specifically, when an enable signal outputted from the control unit 23A changes from LOW to HIGH, the DSP 25 reads out image data from the memory 26 and executes a DNN process. In other words, the DSP 25 executes a DNN process in a time period in which the enable signal is HIGH.

Note that image data to be processed by the DSP 25 may be image data that is ordinarily read out from the pixel array section 32, or may be image data that has a reduced data size due to thinning pixels from image data that is ordinarily read out. Alternatively, image data to be processed by the DSP 25 may be image data that is read out at a smaller data size than normal due to executing thinned readout of pixels with respect to the pixel array section 32. Note that a normal readout here may be reading out without thinning pixels.

There is a DNN process that uses a trained learning model, which is an example of a neural network calculation model, for example. For example, a trained learning model includes, inter alia, a DNN that has learned person or animal identification, brightness correction, face extraction, image correction, or the like by using training data. The DNN process uses a trained learning model, for example, to detect an object from a captured image, identify a person from a captured image, correct the brightness of or noise in a captured image, or extract a face from a captured image.

Note that the DSP 25 uses training data to change the weights of various parameters within the learning model and thereby train the learning model, prepares a plurality of learning models to change a learning model to be used, according to details of a DNN process, or obtains a learning model from an external apparatus.

The memory 26 stores, if necessary, image data that has been outputted from the image capturing unit 21, image data that has been subjected to signal processing by the signal processing unit 24A, a processing result obtained by the DSP 25, or the like. In addition, the memory 26 stores dictionary coefficients and a program for realizing an algorithm for a trained learning model that the DSP 25 executes.

Note that, in detail, the memory 26 has a processing buffer 42 and a result saving unit 43. In a case where a trigger signal supplied from the trigger unit 22A indicates ON for the DSP 25, the memory 26, under control by the control unit 23A, temporarily saves image data outputted from the signal processing unit 24A in the processing buffer 42 for the purpose of a computational process using the DSP 25. A processing result calculated by the DSP 25 is temporarily saved in the processing buffer 42, and is outputted to the selector 27 in alignment with a timing at which image readout ends.

In a case where a trigger signal supplied from the trigger unit 22A indicates OFF for the DSP 25, under the control by the control unit 23A, a pre-stop processing result that has been saved in the processing buffer 42 and is obtained before the DSP 25 stops is saved in the result saving unit 43. Then, the pre-stop processing result saved in the result saving unit 43 is outputted to the selector 27 in alignment with a timing at which image readout ends.

In addition, the memory 26 may store, inter alia, ISO (International Organization for Standardization) sensitivity, an amount of exposure time, a frame rate, focus, an image capturing mode, or a cutout range, in addition to, inter alia, a processing result that is outputted from the DSP 25. In other words, the memory 26 can store various items of image capturing information that are set by a user.

The selector 27, according to a selection control signal from the control unit 23A, for example, selectively outputs image data outputted from the signal processing unit 24A or image data or a processing result that is stored in the memory 26. According to a selection control signal or the like, the selector 27 selects, inter alia, a processing result such as metadata or processed image data that is stored in the memory 26, and outputs the processing result or the like to the application processor 12.

In more detail, while the DSP 25 is operating, the selector 27 reads out a processing result generated by the DSP 25, from the processing buffer 42, and outputs the processing result to the application processor 12. Note that, while the DSP 25 is operating, the selector 27 may directly output, to the application processor 12, a processing result which is outputted from the DSP 25. In contrast, while the DSP 25 is stopped, the selector 27 reads out a pre-stop processing result which has been generated by the DSP 25 and saved in the result saving unit 43, and outputs the pre-stop processing result to the application processor 12.

Image data or a processing result outputted from the selector 27 in the above manner is inputted to the application processor 12, which processes a display, a user interface, or the like. The application processor 12 is, for example, configured using a CPU or the like, and executes, inter alia, an operating system or various instances of application software.

The application processor 12 may be equipped with, inter alia, a GPU (Graphics Processing Unit) or a baseband processor. The application processor 12 executes various kinds of processing as necessary on inputted image data or a calculation result, executes display for a user, or performs transmission to the external cloud server 2 via a predetermined network.

Note that, for the predetermined network, it is possible to employ various networks such as the internet, a wired LAN (Local Area Network) or a wireless LAN, or a mobile communication network, for example. In addition, a transmission destination of image data or a computation result is not limited to the cloud server 2, and may be various information processing apparatuses (systems) that have a communication function, such as a server that operates by itself, a file server that stores various items of data, or a communication terminal such as a mobile telephone.

### <Operation by image capturing apparatus>

FIG. 5 is a view that illustrates a timing chart for operation performed by the image capturing apparatus 1A.

In order from the top, FIG. 5 illustrates timings for "A. image readout," "B. DNN process," "C. DSP enable signal," "D. memory access," "E. control signal," "F. trigger signal," and "G. event-based sensor output." Note that, in practice, signal processing is performed between "A. image readout" and "B. DNN process," but signal processing is omitted in FIG. 5.

In addition, dashed-dotted lines in the vertical direction indicate timings of image capturing by the image capturing unit 21. In other words, a period between the dashed-dotted lines represents one frame interval that is captured by the image capturing unit 21.
"A. image readout" indicates timings for the readout of image data from the image capturing unit 21.
"B. DNN process" indicates operation timings for DNN processes.
"C. DSP enable signal" indicates the state (HIGH or LOW) of the enable signal for the DSP 25.
"D. memory access" indicates timings for saving or readout in or from the memory 26.
"E. control signal" indicates timings for issuing a control signal for controlling driving or stopping of the DSP 25 by the control unit 23A.
"F. trigger signal" indicates issuance timings for trigger signals that are issued from the trigger unit 22A. The trigger unit 22A receives a "has change" or "no change" signal in "G. event-based sensor output" and, in alignment with the timings of image capturing by the image capturing unit 21, issues a trigger signal that indicates ON or OFF for driving of a DNN process by the DSP 25.
"G. event sensor output" indicates the timings and signal details of "has change" and "no change" signals outputted from the event-based sensor 3. Hatched portions represent a signal outputted as "no change," and white portions represent signals outputted as "has change."

Next, description is given in order regarding FIG. 5. After image capturing by the image capturing unit 21, "A. image readout" is performed. During the readout, the control unit 23A outputs a LOW enable signal to the DSP 25.

Before issuance of a control signal that indicates OFF, in other words, in a case where the control signal for the DSP 25 is ON, a HIGH enable signal is supplied from the control unit 23A to the DSP 25 as indicated by "C. DSP enable signal" after "A. image readout," and operation for "B. DNN process" is performed in a HIGH enable time period for the DSP 25.

After end of operation for "B. DNN process," the control unit 23A outputs a LOW enable signal to the DSP 25. In addition, at this point, a DNN processing result is saved in the processing buffer 42 and, as illustrated by "D. memory access," readout is performed such that it is possible to read out image data from the image capturing unit 21 as well the DNN processing result in alignment and before the start of image capturing for the next frame. Then, the image data and the DNN processing result are outputted to the selector 27. The selector 27 outputs the image data and the DNN processing result to the subsequent-stage application processor 12.

In contrast, as indicated by "G. event sensor output," the event-based sensor 3 is capable of sensing at a frame rate higher than that of the image capturing unit 21, and operates asynchronously with respect to the image capturing unit 21. In other words, the trigger unit 22A receives a signal outputted from the event-based sensor 3, asynchronously with respect to timings of image capturing by the image capturing unit 21.

The trigger unit 22A issues a trigger signal that indicates OFF for the DSP 25, in a case of having received a "no change" signal, which is indicated by hatching, from the event-based sensor 3.

When a trigger signal that indicates OFF for the DSP 25 is issued, the control unit 23A, at a start timing for the next frame in the image capturing unit 21, causes the DNN processing result for the previous frame to be saved in the result saving unit 43 as a pre-stop processing result, issues a control signal that indicates OFF, and causes the DSP 25 to stop. Note that, in order for a DNN processing result for a frame after the timing at which the event-based sensor 3 indicates no change to be saved, the DNN processing result for the previous frame may be saved at a start timing for two frames later, instead of the start timing for the immediately subsequent frame, in the image capturing unit 21.

For the time period in which driving of a DNN process is OFF, the control unit 23A causes the selector 27 to output the pre-stop processing result that has been saved in the result saving unit 43. The selector 27 outputs a captured image and the pre-stop processing result to the subsequent-stage application processor 12.

Subsequently, in a case where a "has change" signal continues for a certain number of frames (for example, three frames) in the event-based sensor 3, the trigger unit 22A issues a trigger signal that indicates ON for the DSP 25.

In a case of receiving a trigger signal that indicates ON for the DSP 25, the control unit 23A issues a control signal that indicates ON at a start timing for the next frame, and causes the DSP 25 to resume.

In other words, the control signal for the DSP 25 is ON. Therefore, as described above and as indicated by "C. DSP enable signal" after "A. image readout," a HIGH enable signal is supplied to the DSP 25 from the control unit 23A, and operation for "B. DNN process" is performed during an enable time period for the DSP 25.

After end of operation for "B. DNN process," the control unit 23A outputs a LOW enable signal to the DSP 25. In addition, at this point, a DNN processing result is saved in the processing buffer 42 and, as illustrated by "D. memory access," readout is performed such that it is possible to read out image data from the image capturing unit 21 as well the DNN processing result in alignment and before the start of image capturing for the next frame. Then, the image data and the DNN processing result are outputted to the selector 27. The selector 27 outputs the image data and the DNN processing result to the subsequent-stage application processor 12.

By configuring as above, it is possible to stop operation performed by the DSP 25, by use of a signal generated from an external unit. In FIG. 5, in a case where there is no change in the luminance of a pixel in the event-based sensor 3, in other words, in a case where there is no mobile body such as a person, there is no need to detect a person, and it is thus possible to stop operation performed by the DSP 25. Accordingly, there is no need to perform unnecessary DSP operation, and it is thus possible to reduce power consumption.

In addition, during a time period in which the DSP is stopped, a saved pre-stop processing result is outputted at the same frame rate as that of captured image data, whereby it is possible to achieve output that does not substantially differ from causing the DSP to operate. As a result, there is no need to carry out, inter alia, additional support in processing in a subsequent stage.

It is possible to, on the basis of a signal received at any timing from an external unit, issue a trigger for driving (resuming) or stopping a DSP, and it is possible to output a pre-stop processing result in synchronization with the next image sensor output timing.

In the above description, description is given for an example in which "has change" and "no change" signals are outputted from the event-based sensor 3, but a signal indicating the number of events may be outputted.

In addition, a signal received by the trigger unit 22A is not limited to a signal that is outputted from the event-based sensor 3, and may be a signal that is outputted from, inter alia, a sensor or a processing unit that can detect motion within a screen. In such circumstances, the presence or absence of motion within a screen does not need to be based on a change in the luminance of a pixel in a sensor, and may be based on other processing such as a motion vector search. In addition, the sensor or processing unit may be provided outside of the image capturing apparatus 1A, or may be provided inside of the image capturing apparatus 1A.

### <Processing by image capturing apparatus>

FIG. 6 is a flow chart for describing processing performed by the image capturing apparatus 1A in FIG. 3.

At a time of activation, in step S11, the control unit 23A transmits a control signal for causing the DSP 25 to operate (indicating ON), and causes the DSP 25 to operate.

Meanwhile, the control unit 23A reads out image data from the image capturing unit 21, and outputs the signal processing unit 24A. The signal processing unit 24A performs predetermined signal processing on the image data supplied from the image capturing unit 21, outputs signal-processed image data to the selector 27, and saves the signal-processed image data in the processing buffer 42 in the memory 26.

In step S12, the control unit 23A outputs a HIGH enable signal to the DSP 25. During a HIGH enable time period, the DSP 25 performs a DNN process on the image in the processing buffer 42, and saves a DNN processing result in the processing buffer 42.

In step S13, the control unit 23A reads out the DNN processing result from the processing buffer 42. The selector 27 outputs, to the subsequent-stage application processor 12, the signal-processed image data that is supplied from the signal processing unit 24A and the DNN processing result that is read out from the memory 26.

As described above with reference to FIG. 5, the trigger unit 22A issues a trigger signal that indicates OFF for the DSP 25, in a case of having received a "no change" signal, which is indicated by hatching, from the event-based sensor 3.

In step S14, the control unit 23A determines whether or not the control unit 23A has received a trigger signal that indicates OFF for the DSP 25. In a case where it is determined in step S14 that a trigger signal that indicates OFF for the DSP 25 is not received, the processing proceeds to step S15.

In step S15, the control unit 23A determines whether or not to end image capturing. In a case where it is determined in step S15 to end image capturing, the processing in FIG. 6 ends.

In a case where it is determined in step S15 not to end image capturing, the processing returns to step S12, and processing in step S12 and subsequent steps is repeated.

In a case where it is determined in step S14 that a trigger signal that indicates OFF for the DSP 25 has been received, the processing proceeds to step S16.

In step S16, the control unit 23A causes a pre-stop processing result to be saved in the result saving unit 43.

In step S17, the control unit 23A transmits a control signal for causing the DSP 25 to stop (indicating OFF), and causes the DSP 25 to stop.

In step S18, the control unit 23A reads out the pre-stop processing result that has been saved in the result saving unit 43, and outputs the pre-stop processing result to the selector 27. The selector 27 outputs the signal-processed image and the pre-stop processing result to the subsequent-stage application processor 12.

As described above with reference to FIG. 5, the trigger unit 22A issues a trigger signal that indicates ON for the DSP 25, in a case of having received a "has change" signal, which is indicated by hatching, for a predetermined number of frames from the event-based sensor 3.

In step S19, the control unit 23A determines whether or not the control unit 23A has received a trigger signal that indicates ON for the DSP 25. In a case where it is determined in step S19 that a trigger signal that indicates ON for the DSP 25 is received, the processing returns to step S11, and processing in step S11 and subsequent steps is repeated.

In a case where it is determined in step S19 that a trigger signal that indicates ON for the DSP 25 has not been received, the processing proceeds to step S20.

In step S20, the control unit 23A determines whether or not to end image capturing. In a case where it is determined in step S20 to end image capturing, the processing in FIG. 6 ends.

In a case where it is determined in step S20 not to end image capturing, the processing returns to step S18, and processing in step S18 and subsequent steps is repeated.

### <3. Second embodiment>

### <Functional configuration of image capturing apparatus>

FIG. 7 is a block view that illustrates a functional configuration of a second embodiment of an image capturing apparatus to which the present technique is applied.

The configuration in FIG. 7 differs from the configuration in FIG. 3 in that the image capturing apparatus 1A is replaced with the image capturing apparatus 1B and that the event-based sensor 3 connected to the image capturing apparatus 1A is eliminated.

The image sensor 11B in FIG. 7 differs from the image sensor 11A in FIG. 3 in that the trigger unit 22A, the control unit 23A, and the signal processing unit 24A are replaced with a trigger unit 22B, a control unit 23B, and a signal processing unit 24B. Note that the memory 26 in FIG. 7 differs from the memory 26 in FIG. 3 in that the result saving unit 43 is eliminated. In addition, in FIG. 7, corresponding reference signs are added to units that correspond to those in FIG. 3, and description thereof would be repetitive and is thus omitted.

In other words, FIG. 3 illustrated an example in which a trigger signal is issued on the basis of a signal from the external event-based sensor 3, but in the image sensor 11B in FIG. 7, a trigger signal is issued on the basis of a signal from the signal processing unit 24B that is inside the image capturing apparatus 1B.

When the signal processing unit 24B performs signal processing described above with reference to FIG. 3 on image data obtained from the image capturing unit 21, the signal processing unit 24B calculates an average luminance value of the image data and, in a case where the average luminance value is continuously less than a certain level, outputs, to the trigger unit 22B, a signal indicating that the average luminance value of the image data is less than the certain level. In addition, in a case where a scene becomes bright again and the average luminance value of image data continuously exceeds the certain level, the signal processing unit 24B outputs, to the trigger unit 22B, a signal indicating that the average luminance value of the image data exceeds the certain level.

The trigger unit 22B, in a case of having received a signal that indicates "the average luminance value of image data is less than the certain level" and that is outputted from the signal processing unit 24B, issues a trigger signal that indicates OFF for the DSP 25. Subsequently, the trigger unit 22B, in a case of having received a signal that indicates "the average luminance value of image data exceeds the certain level" and that is outputted from the event-based sensor 3, issues a trigger signal that indicates ON for the DSP 25.

The control unit 23B, in a case where a trigger signal issued by the trigger unit 22B indicates ON for the DSP 25, causes the DSP 25 to operate, sets the image capturing unit 21 to a normal frame rate, and executes subsequent processing.

In other words, as in the case for FIG. 3, the control unit 23B outputs a LOW enable signal (in other words, an OFF signal) to the DSP 25 while an image readout process from the image capturing unit 21 is being executed. Then, when the image readout process from the image capturing unit 21 completes, the control unit 23B outputs a HIGH enable signal (in other words, an ON signal) to the DSP 25, and causes the selector 27 to output a result of processing performed by the DSP 25.

Subsequently, when a DNN process by the DSP 25 completes, the control unit 23B outputs a LOW enable signal (in other words, an OFF signal) to the DSP 25.

In contrast, in a case where a trigger signal inputted via the trigger unit 22 indicate OFF, the control unit 23B causes the image capturing unit 21 to decrease the frame rate, and causes the DSP 25 to stop. Note that frame rate control that corresponds to ON or OFF indicated by this trigger signal can also be applied to the first embodiment. When an image readout process from the image capturing unit 21 completes, the control unit 23B causes the selector 27 to output a detection stop flag which is information pertaining to stoppage of DNN processes, instead of a DNN processing result.

By the configuration described above, for example, for a scene that does not require a DNN process, such as a very dark scene, it is not necessary to perform unneeded DSP operation, and it is thus possible to reduce unnecessary power consumption. In addition, the subsequent-stage application processor 12 can know that the DNN process is stopped and is thus capable of performing processing that corresponds to stoppage of the DNN process.

Note that given in FIG. 7 is description regarding an example in which, in the signal processing unit 24B, a trigger signal is issued on the basis of a signal indicating that a luminance value of image data for a scene continuously exceeds or is less than a predetermined luminance value. However, a sensor or the like that measures a luminance value may be used in the outside the image capturing apparatus 1B instead of the inside the image capturing apparatus 1B.

In addition, in the image sensor 11B in FIG. 7, operation or stoppage of the DSP is controlled on the basis of whether the luminance value of image data in a scene exceeds or is less than an average luminance value. However, it is sufficient if what is to be determined is a signal that indicates a characteristic of image data, and is not limited to a luminance value.

For example, a feature amount of image data that has been used when a DNN process is trained may be saved in the signal processing unit 24B, and the DSP may be caused to stop in a case where a feature amount of image data generated by image capturing is separated by a predetermined amount from the feature amount of the image data that has been used at a time of training. In addition, the DSP may be caused to operate and caused to perform ordinary processing in a case where image data generated by image capturing is close to the feature amount of the image data that has been used at a time of training.

In other words, in a case where the feature amount of the image data generated by image capturing is separated by the predetermined amount from the feature amount of the image that has been used at a time of training, such as a scene where a mobile body such as a person is not present or a very dark scene, there is no need to cause the DSP to operate, and the DSP is thus caused to stop, whereby it is possible to reduce unnecessary power consumption.

### <Processing by image capturing apparatus>

FIG. 8 is a flow chart for describing processing performed by the image capturing apparatus 1B in FIG. 7.

At a time of activation, in step Sill, the control unit 23B transmits a control signal for causing the DSP 25 to operate (indicating ON), and causes the DSP 25 to operate.

Meanwhile, the control unit 23B reads out an image from the image capturing unit 21, and outputs the image to the signal processing unit 24B. The signal processing unit 24B performs predetermined signal processing on the image supplied from the image capturing unit 21, outputs signal-processed image to the selector 27, and stores the signal-processed image in the processing buffer 42 in the memory 26.

In addition, at this point, as described above with reference to FIG. 7, the signal processing unit 24B determines whether the average luminance value of the image data is continuously less than a certain level or continuously exceeds the certain level and, according to a determination result, outputs, to the trigger unit 22B, a signal indicating that the average luminance value of luminance data is less than the certain level or a signal indicating that the average luminance value of luminance data exceeds the certain level.

In step S112, the control unit 23B outputs a HIGH enable signal to the DSP 25. During a HIGH enable time period, the DSP 25 performs a DNN process on the image in the processing buffer 42, and saves a DNN processing result.

In step S113, the control unit 23B reads out the DNN processing result from the processing buffer 42, and outputs the DNN processing result to the selector 27. The selector 27 outputs, to the subsequent-stage application processor 12, the signal-processed image that is supplied from the signal processing unit 24B and the DNN processing result that is read out from the processing buffer 42.

The trigger unit 22B, in a case of having received, from the signal processing unit 24B, a signal indicating that the average luminance value of luminance data is less than the certain level, issues a trigger signal that indicates OFF for the DSP 25.

In step S114, the control unit 23B determines whether or not the control unit 23B has received a trigger signal that indicates OFF for the DSP 25. In a case where it is determined in step S114 that a trigger signal that indicates OFF for the DSP 25 is not received, the processing proceeds to step S115.

In step S115, the control unit 23B determines whether or not to end image capturing. In a case where it is determined in step S115 to end image capturing, the processing in FIG. 8 ends.

In a case where it is determined in step S115 not to end image capturing, the processing returns to step S112, and processing in step S112 and subsequent steps is repeated.

In a case where it is determined in step S114 that a trigger signal that indicates OFF for the DSP 25 has been received, the processing proceeds to step S116.

In step S116, the control unit 23B transmits a control signal for causing the DSP 25 to stop (indicating OFF), and causes the DSP 25 to stop.

In step S117, the control unit 23B causes the frame rate of the image capturing unit 21 to decrease.

In step S118, the control unit 23B causes the selector 27 to output a result stop flag. The selector 27 outputs, to the subsequent-stage application processor 12, the signal-processed image and the result stop flag.

In addition, the trigger unit 22B issues a trigger signal that indicates ON for the DSP 25, in a case of having received, from the signal processing unit 24B over a predetermined number of frames, a signal indicating that the average luminance value of luminance data exceeds the certain level.

In step S119, the control unit 23A determines whether or not the control unit 23A has received a trigger signal that indicates ON for the DSP 25. In a case where it is determined in step S119 that a trigger signal that indicates ON for the DSP 25 is received, the processing proceeds to step S120.

In step S120, the control unit 23A returns the frame rate of the image capturing unit 21 to the original frame rate. Subsequently, the processing returns to step Sill, and processing in step Sill and subsequent steps is repeated.

In a case where it is determined in step S119 that a trigger signal that indicates ON for the DSP 25 has not been received, the processing proceeds to step S121.

In step S121, the control unit 23B determines whether or not to end image capturing. In a case where it is determined in step S21 to end image capturing, the processing in FIG. 8 ends.

In a case where it is determined in step S121 not to end image capturing, the processing returns to step S118, and processing in step S118 and subsequent steps is repeated.

### <4. Floor plan>

### <Chip configuration of image sensor>

Next, with reference to the following drawings, description regarding an example of a chip configuration for the image sensors in FIG. 3 and FIG. 7 is given below in detail.

Below, in a case where there is no particular need to differentiate, the image capturing apparatus 1A, the image sensor 11A, the trigger unit 22A, the control unit 23A, and the signal processing unit 24A in FIG. 3 as well as the image capturing apparatus 1B, the image sensor 11B, the trigger unit 22B, the control unit 23B, and the signal processing unit 24B in FIG. 7 are referred to as the image capturing apparatus 1, the image sensor 11, the trigger unit 22, the control unit 23, and the signal processing unit 24.

FIG. 9 is a schematic view that illustrates an example of a configuration of a chip that has a two-layer structure and is for an image sensor according to the present embodiment. As illustrated in FIG. 9, an image sensor 11 has a stacked structure (a two-layer structure) resulting from affixing together a quadrilateral, flat plate-shaped first substrate (die) 101 and a second substrate (die) 102 that has the same quadrilateral, flat plate shape.

The sizes of the first substrate 101 and the second substrate 102 may be the same, for example. In addition, the first substrate 101 and the second substrate 102 may each be a semiconductor substrate such as a silicon substrate.

In the configuration of the image sensor 11, the pixel array section 32 in the image capturing unit 21 is disposed in the first substrate 101. In addition, part or all of the optical system 31 may be provided, on-chip, in the first substrate 101.

In the configuration of the image sensor 11, the ADC 33, the trigger unit 22, the control unit 23, the signal processing unit 24, the DSP 25, the memory 26, and the selector 27 are disposed in the second substrate 102. Note that an interface circuit, a driver circuit, or the like which is not illustrated may be disposed in the second substrate 102.

Affixing the first substrate 101 and the second substrate 102 together may be performed by use of what is generally called a CoC (Chip on Chip) method in which each of the first substrate 101 and the second substrate 102 is singulated to a chip and the singulated first substrate 101 and second substrate 102 are affixed together, may be performed by use of what is generally called a CoW (Chip on Wafer) method in which one of the first substrate 101 and the second substrate 102 (for example, the first substrate 101) is singulated to a chip and the singulated first substrate 101 is affixed to the second substrate 102 that has not yet been subjected to singulation (in other words, the second substrate 102 in a wafer state), or may be performed by use of what is generally called a WoW (Wafer on Wafer) method in which the first substrate 101 and the second substrate 102 are affixed together while both are in the wafer state.

As a method of bonding the first substrate 101 and the second substrate 102 to each other, it is possible to use plasma bonding or the like, for example. However, there is no limitation to this, and various bonding methods may be used.

### <Floor map for two-layer structure>

FIG. 10 is a view that illustrates a floor map example for the first substrate 101.

As illustrated in FIG. 10, in the configuration of the image sensor 11, the pixel array section 32 in the image capturing unit 21 is disposed in the first substrate 101. Note that, in a case of mounting part or all of the optical system 31 to the first substrate 101, part or all of the optical system 31 may be provided at a position that corresponds to the pixel array section 32.

The pixel array section 32 is disposed biased toward one edge L111 side among four edges L111 through L114 of the first substrate 101. In other words, the pixel array section 32 is disposed such that a central portion O32 thereof is closer to the edge L111 than a central portion O101 of the first substrate 101 is. Note that, in a case where a surface of the first substrate 101 on which the pixel array section 32 is provided is rectangular, the edge L111 may be a shorter edge, for example. However, there is no limitation to this, and the pixel array section 32 may be disposed biased toward a longer edge.

A TSV array 121 in which a plurality of through wires (Through Silicon Via; hereinafter referred to as a TSV) that penetrate the first substrate 101 are arrayed as wiring for causing each unit pixel 32a in the pixel array section 32 to be electrically connected to the ADC 33 disposed in the second substrate 102 is provided in a region close to the edge L111 among the four edges of the pixel array section 32, in other words, the region between the edge L111 and the pixel array section 32. In such a manner, the TSV array 121 is caused to be close to the edge L111 to which the pixel array section 32 is close, whereby it is possible to make it easier to ensure space for disposing each unit such as the ADC 33 in the second substrate 102.

Note that a TSV array 121 may be provided in a region that is, among the two edges L113 and L114 that meet the edge L111, close to the edge L114 (however, may be close to the edge L113), in other words, a region that is between the edge L114 (or the edge L114) and the pixel array section 32.

A pad array 122 including a plurality of pads arrayed in a straight line is provided at each of the edges L112 and L113 at which the pixel array section 32 is not disposed biased toward, among the four edges L111 through L114 of the first substrate 101. For example, the pads included in the pad arrays 122 include, inter alia, a pad (may be referred to as a power supply pin) to which a power supply voltage for an analog circuit such as the pixel array section 32 or the ADC 33 is applied, a pad (may be referred to as a power supply pin) to which a power supply voltage for a digital circuit such as the signal processing unit 24, the DSP 25, the memory 26, the selector 27, or the control unit 23 is applied, a pad (may be referred to as a signal pin) for an interface such as an MIPI (Mobile Industry Processor Interface) or an SPI (Serial Peripheral Interface), or a pad (may be referred to as a signal pin) for the input or output of a clock or data.

Each pad is, for example, electrically connected to an external power supply circuit or interface circuit via a wire. It is desirable for each pad array 122 to be sufficiently separated from the TSV array 121 to a level at which it is possible to ignore the impact of the reflection of signals from wires connected to the pads in the pad array 122.

FIG. 11 is a view that illustrates a floor map example for the second substrate 102.

As illustrated in FIG. 11, in the configuration of the image sensor 11, the ADC 33, the control unit 23, the signal processing unit 24, the DSP 25, and the memory 26 are disposed in the second substrate 102. Note that, in the floor map example in FIG. 12, the memory 26 is divided into two regions corresponding to a memory 26L and a memory 26R. Similarly, the ADC 33 is divided into two regions corresponding to an ADC 33L and a DAC (Digital to Analog Converter) 33R. The DAC 33R has a configuration for supplying the ADC 33L with a reference voltage for AD conversion, and is included in a portion of the ADC 33 in a broad sense. Although not illustrated in FIG. 11, the trigger unit 22 and the selector 27 are also disposed in the second substrate 102.

Further, provided in the second substrate 102 are wiring 131 that are in contact with each TSV in the TSV array 121 that penetrates the first substrate 101 (hereinafter, simply referred to as the TSV array 121) and are thereby electrically connected thereto, and pad arrays 132 in which a plurality of pads which are electrically connected to respective pads in the pad arrays 122 in the first substrate 101 are arrayed in a straight line.

To connect the TSV array 121 and the wiring 131 to each other, for example, it is possible to employ, inter alia, what is generally called a twin TSV method in which two TSV which are a TSV provided on the first substrate 101 and a TSV provided from the first substrate 101 toward the second substrate 102 are connected to each other on the outer surface of the chip, or what is generally called a shared TSV method in which the connection is made by a common TSV provided from the first substrate 101 toward the second substrate 102. However, there is no limitation to these, and, for example, it is possible to employ various connection forms such as what is generally called a Cu-Cu bonding method by which copper (Cu) which has been caused to be exposed on a bonding surface of the first substrate 101 and copper (Cu) which has been caused to be exposed on a bonding surface of the second substrate 102 are bonded to each other.

A connection form between pads in the pad arrays 122 in the first substrate 101 and pads in the pad arrays 132 in the second substrate 102 is wire bonding, for example. However, such connection forms are not limited to wire bonding, and may be through holes, castellation, or the like.

In the floor map example for the second substrate 102, for example, letting the vicinity of wiring 131 connected to a TSV array 121 be an upstream side, the ADC 33L, the signal processing unit 24, and the DSP 25 are disposed in order from upstream, following the flow of signals read out from the pixel array section 32. In other words, the ADC 33L, to which a pixel signal read out from the pixel array section 32 is first inputted, is disposed near the wiring 131 that is most on the upstream side, the signal processing unit 24 is disposed next, and the DSP 25 is disposed in a region that is farthest from the wiring 131. In such a manner, a layout in which the ADC 33L to the DSP 25 are disposed, following the flow of signals, from the upstream side is employed, whereby it becomes possible to shorten wiring for connecting each unit. As a result, it becomes possible to reduce signal delay, reduce signal propagation loss, improve the SN ratio, or reduce power consumption.

The control unit 23 is disposed near the wiring 131 that is on the upstream side, for example. In addition, the trigger unit 22 is disposed near the control unit 23, for example. In FIG. 12, the control unit 23 is disposed between the ADC 33L and the signal processing unit 24. By employing such a layout, it becomes possible to reduce signal delay, reduce signal propagation loss, improve the SN ratio, or reduce power consumption when the control unit 23 controls the pixel array section 32. In addition, there is also an advantage of being able to, inter alia, collectively dispose signal pins or power supply pins for analog circuits near the analog circuits (for example, at the bottom side in FIG. 11), collectively dispose signal pins or power supply pins for the remaining digital circuits near the digital circuits (for example, on the upper side in FIG. 11), and dispose power supply pins for analog circuit sufficiently separated from power supply pins for digital circuits.

In addition, in the floor map illustrated in FIG. 11, the DSP 25 is disposed on the side opposite to the ADC 33L, which is the most downstream side. In other words, by employing such a layout, it becomes possible to dispose the DSP 25 in a region that does not overlap with the pixel array section 32, in a direction in which the first substrate 101 and the second substrate 102 are stacked (hereinafter, simply referred to as the vertical direction).

In such a manner, a configuration in which the pixel array section 32 and the DSP 25 do not overlap with each other in the vertical direction is achieved, whereby it becomes possible to reduce noise which is generated by the DSP 25 executing signal processing from getting into the pixel array section 32. As a result, even in a case where the DSP 25 is caused to operate as a processing unit that executes a computation based on a trained model, it becomes possible to reduce noise caused by signal processing performed by the DSP 25 getting into the pixel array section 32, and thus, it becomes possible to obtain an image that has reduced deterioration of quality.

Note that the DSP 25 and the signal processing unit 24 are connected to each other by a connection section 25a that is configured by a portion of the DSP 25 or a signal line. In addition, the selector 27 is disposed near the DSP 25, for example. In a case where the connection section 25a is a portion of the DSP 25, a portion of the DSP 25 overlaps with the pixel array section 32 in the vertical direction, but, even in such a case, it is possible to reduce noise getting into the pixel array section 32 in comparison to a case where the entirety of the DSP 25 overlaps with the pixel array section 32 in the vertical direction.

The memories 26L and 26R are disposed in such a manner as to surround the DSP 25 from three directions, for example. The memories 26L and 26R are disposed in such a manner as to surround the DSP 25 as mentioned above, whereby it is possible to shorten, on the whole, the length of wiring between the DSP 25 and each memory element in the memory 26, while averaging such lengths. As a result, it becomes possible to reduce signal delays, signal propagation loss, or power consumption when the DSP 25 accesses the memory 26.

The pad arrays 132 are disposed at positions on the second substrate 102 that correspond to the pad arrays 122 of the first substrate 101 in the vertical direction, for example. Here, pads positioned near the ADC 33L among pads included in the pad arrays 132 are used for propagation of an analog signal or a power supply voltage for an analog circuit (primarily, the ADC 33L).

In contrast, pads positioned near the control unit 23, the signal processing unit 24, the DSP 25, or the memories 26L and 26R are used for propagation of a digital signal or a power supply voltage for a digital circuit (primarily, the control unit 23, the signal processing unit 24, the DSP 25, and the memories 26L and 26R). By employing such a pad layout, it becomes possible to shorten the length of wiring for connecting the pads with the respective units. As a result, it becomes possible to reduce signal delay, reduce propagation loss for signals or a power supply voltage, improve the SN ratio, or reduce power consumption.

### <Configuration of three-layer structure>

As illustrated in FIG. 12, the image sensor 11 may have a stacked structure (three-layer structure) resulting from affixing together a first substrate, a second substrate, and a third substrate which have quadrilateral, flat plate shapes.

FIG. 12 is a schematic view that illustrates an example of a configuration of a chip that has a three-layer structure and is for an image sensor according to the present embodiment.

Given is description regarding a floor map for each layer for the first substrate, the second substrate, and the third substrate in the image sensor 11 in this case.

In FIG. 12, the pixel array section 32 is disposed in a first substrate 201, an analog circuit 205 and a logic circuit 206 are disposed in a second substrate 202, and the DSP 25 and the memory 26 are disposed in a third substrate 203. In addition, an electromagnetic shield 204 is disposed between the second substrate 202 and the third substrate 203 and above the DSP 25 and the memory 26. Note that it is sufficient if the electromagnetic shield 204 is disposed at a position that corresponds to at least a portion of the DSP 25.

Description for an example of a floor map for each layer in the configuration in FIG. 12 is given below in further detail.

FIG. 13 is a view that illustrates a floor map example for the first substrate.

In FIG. 13, the first substrate 201 is provided with the pixel array section 32 which is disposed in a large portion of an element formation surface of the first substrate 201. In other words, in order to align with the size of the pixel array section 32, the first substrate 201 is singulated to a size that is slightly larger than the size of the pixel array section 32. Note that, in a case of mounting part or all of the optical system 31 to the first substrate 201, part or all of the optical system 31 is provided at a position that corresponds to the pixel array section 32.

As a portion of a vertical signal line for causing each unit pixel 32a in the pixel array section 32 to be electrically connected to the analog circuit 205 disposed in the second substrate 202, a TSV array 221 in which a plurality of through wiring (TSV) that penetrate the first substrate 201 is provided in a region that is close to, for example, an edge L211 that is parallel to the row direction of the unit pixels 32a that are arrayed two-dimensionally in a matrix in the pixel array section 32, among four edges L211 through L214 of the first substrate 201. In addition, the TSV array 221 in which a plurality of TSVs that penetrate the first substrate 201 are arrayed is provided as a portion of drive lines for driving unit pixels 32a, in a region close to the edge L214 that is parallel to the column direction of the array of unit pixels 32a, for example.

In addition, a pad array 222 including a plurality of pads arrayed in a straight line is provided at each of the edges L212 and L214, for example, among the four edges L211 through L212 of the first substrate 201. For example, each pad array 222 includes, inter alia, a pad (may be referred to as a power supply pin) to which a power supply voltage for an analog circuit such as the pixel array section 32 or the ADC 33 is applied or a pad (may be referred to as a power supply pin) to which a power supply voltage for a logic circuit such as the signal processing unit 24, the DSP 25, the memory 26, the selector 27, or the control unit 23 is applied. In addition, each pad array 222 may include, inter alia, a pad (may be referred to as a signal pin) for an interface such as an MIPI (Mobile Industry Processor Interface) or an SPI (Serial Peripheral Interface) or a pad (may be referred to as a signal pin) for the input or output of a clock signal or data.

Each pad in the pad arrays 222 is, for example, electrically connected to an external power supply circuit or interface circuit via a wire. It is desirable for each pad array 222 to be sufficiently separated from the TSV arrays 221 to a level at which it is possible to ignore the impact of the reflection of signals from wires connected to the pads in the pad array 222.

FIG. 14 is a view that illustrates a floor map example for the second substrate.

In FIG. 14, provided in the second substrate 202 are wiring 231 that are in contact with each TSV in the TSV array 221 that penetrates the first substrate 201 (hereinafter, simply referred to as the TSV array 221) and are thereby electrically connected thereto, and pad arrays 232 in which a plurality of pads which are electrically connected to respective pads in the pad arrays 222 in the first substrate 201 are arrayed in a straight line.

In addition, the ADC 33 that corresponds to the analog circuit 205 and the signal processing unit 24 that corresponds to the logic circuit 206 are disposed in the second substrate 202 in an order from a region close to the wiring 231. In other words, letting upstream be the wiring 231 on which a signal from the pixel array section 32 in the first substrate 201 is read out and letting downstream be the sides that are physically far from the wiring 231, the analog circuit 205 and the logic circuit 206 are disposed in the second substrate 202 such that a signal read out on the wiring 231 flows from upstream to downstream.

Further, a pad array 234 in which a plurality of electrode pads for electrically connecting the signal processing unit 24 with the DSP 25 in the third substrate 203 are arrayed, for example, is provided on the rear surface-side of the second substrate 202, in other words, on a downstream side of the second substrate 202.

In such a manner, achieved is a layout in which the analog circuit 205 and the logic circuit 206 are disposed from upstream to downstream following the flow of signals, whereby it becomes possible to shorten wiring for connecting each unit. As a result, it becomes possible to reduce signal delay, reduce signal propagation loss, improve the SN ratio, or reduce power consumption.

In addition, there is also an advantage of being able to, inter alia, collectively dispose signal pins or power supply pins for analog circuits near the analog circuit 205, collectively dispose signal pins or power supply pins for the remaining logic circuits near the logic circuit 206, and dispose power supply pins for analog circuit sufficiently separated from power supply pins for logic circuits.

Note that the control unit 23 may be partially disposed between the ADC 33 and the signal processing unit 24, for example.

FIG. 15 is a view that illustrates a floor map example for the third substrate.

In FIG. 15, provided on the third substrate 203 are a pad array 243 in which a plurality of electrode pads for electrically connecting with respective electrode pads in the pad array 234 provided on the rear surface of the second substrate 202 arrayed, and a pad array 242 in which a plurality of pads that are electrically connected to respective pads in the pad arrays 232 in the second substrate 202 are arrayed in a straight line.

In addition, the DSP 25 and the memory 26 are disposed in the third substrate 203 in an order from a region close to the pad array 243. In other words, letting upstream be the pad array 243 to which a signal that is outputted from the signal processing unit 24 in the second substrate 202 is inputted and letting downstream be a side that is physically far from the pad array 243, the DSP 25 and the memory 26 are disposed in the third substrate 203 such that a signal read out from the pad array 243 flows from upstream to downstream.

Further, the electromagnetic shield 204 is provided between a region on the third substrate 203 in which the DSP 25 is provided and the second substrate 202. In such a manner, the electromagnetic shield 204 that covers the DSP 25 is provided, whereby it becomes possible to reduce noise occurring due to the DSP 25 executing signal processing from getting into the pixel array section 32. As a result, even in a case where the DSP 25 is caused to operate as a machine learning unit, it becomes possible to reduce noise caused by signal processing by the DSP 25 getting into the pixel array section 32, and thus, it becomes possible to obtain an image that has reduced deterioration of quality.

Note that a position for inserting the electromagnetic shield 204 is not limited to a position between the second substrate 202 and the third substrate 203, and may be a position between the first substrate 201 and the second substrate 202. In addition, the electromagnetic shield 204 does not necessarily need to cover the entirety of the DSP 25, and it is sufficient if the electromagnetic shield 204 covers at least a portion of the DSP 25.

To connect the TSV arrays 221 and 223 on the first substrate 201 with the wiring 231 and 233 on the second substrate 202, for example, it is possible to employ, inter alia, what is generally called a twin TSV method in which two TSV which are a TSV provided on the first substrate 201 and a TSV provided from the first substrate 201 toward the second substrate 202 are connected on the outer surface of the chip, or what is generally called a shared TSV method in which the connection is made by a common TSV provided from the first substrate 201 toward the second substrate 202. However, there is no limitation to these, and, for example, it is possible to employ various connection forms such as what is generally called a Cu-Cu bonding method by which copper (Cu) which has been caused to be exposed on a bonding surface of the first substrate 201 and copper (Cu) which has been caused to be exposed on a bonding surface of the second substrate 202 are bonded to each other.

In addition, for example, it is possible to employ a wire bonding method for the connection between respective pads in the pad arrays 222 on the first substrate 201, respective pads in the pad arrays 232 in the second substrate 202, and respective pads in the pad arrays 242 in the third substrate 203. However, there is no limitation to this, and it is also possible to employ various connection forms such as through holes or castellation.

Further, it is possible to use Cu-Cu bonding, for example, for connections between the pad array 234 on the rear surface of the second substrate 202 and the pad array 243 in the third substrate 203. However, there is no limitation to this, and it is possible to employ various connection forms such as the above-described twin TSV method or shared TSV method.

### <5. Other embodiments>

Processing according to the embodiments described above may be performed in various different forms apart from the embodiments described above.

Numbers such as frame rates or predetermined amounts of time that are described in the above-described embodiments are merely examples, and can be changed as desired. In addition, details or the like of DNN processes described in each embodiment are also examples, and it is possible to employ various kinds of processing that uses learning models. In addition, it is also possible to execute a DNN process when an enable signal is inactive (OFF) and execute an image readout process when an enable signal is active (ON).

A learning model trained in a DNN is exemplified in the embodiments described above, but it is possible to use various neural networks that are not DNNs, such as an RNN (Recurrent Neural Networks) or a CNN (Convolutional Neural Network). In addition, there is no limitation to a learning model that uses a DNN or the like. It is also possible to use a learning model that is trained by various other kinds of machine learning such as a decision tree or a support vector machine.

Note that, in the description given above, described is an example of issuing a trigger signal on the basis of a signal that indicates the presence or absence of similarity of a feature amount of an image, luminance values within an image, or the presence or absence of motion within a screen based on a change in the luminance of pixels in a sensor. However, a signal that the trigger unit 22 refers to is not limited to a signal indicating whether or not there is motion within an image, the similarity of feature amounts of image, or luminance values within an image. It is sufficient if a signal that the trigger unit 22 refers to is a signal by which it is understood that there is no need to perform a DNN process. In addition, these signals may be a signal from outside of the image capturing apparatus 11 or may be a signal from inside of the image capturing apparatus 11.

Information that includes processing procedures, control procedures, specific names, or various kinds of data or parameters described in this description or the drawings can be changed as desired except in a case of making special mention of such information. In addition, specific examples, distributions, numbers, or the like described in the embodiments are merely examples, and can be changed as desired.

In addition, each component of each illustrated apparatus is functional and conceptual, does not necessarily need to be physically configured as illustrated. In other words, specific aspects of distribution and integration for each apparatus is not limited to that illustrated, and it is possible to configure such that all or a part of each apparatus is functionally or physically distributed or integrated in any unit and according to, inter alia, variance loads or usage statuses. For example, the control unit 23 and the signal processing unit 24 illustrated in FIG. 3 or FIG. 7 may be integrated.

### <6. Examples of application>

### <Example of application to mobile body>

The technique according to the present disclosure (the present technique) can be applied to various products. For example, the technique according to the present disclosure may be realized as an apparatus that is mounted to any type of mobile body such as an automobile, an electric automobile, a hybrid electric vehicle, a motorcycle, a bicycle, a personal transporter, an airplane, a drone, a ship, or a robot.

FIG. 16 is a block diagram depicting an example of schematic configuration of a vehicle control system as an example of a mobile body control system to which the technology according to an embodiment of the present disclosure can be applied.

The vehicle control system 12000 includes a plurality of electronic control units connected to each other via a communication network 12001. In the example depicted in FIG. 16, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle to travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of FIG. 16, an audio speaker 12061, a display section 12062, and an instrument panel 12063 are illustrated as the output device. The display section 12062 may, for example, include at least one of an on-board display and a head-up display.

FIG. 17 is a diagram depicting an example of the installation position of the imaging section 12031.

In FIG. 17, the imaging section 12031 includes imaging sections 12101, 12102, 12103, 12104, and 12105.

The imaging sections 12101, 12102, 12103, 12104, and 12105 are, for example, disposed at positions on a front nose, sideview mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Incidentally, FIG. 17 depicts an example of photographing ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

Given above is description regarding an example of a vehicle control system to which the technique according to the present disclosure can be applied. Among the configurations described above, the technique according to the present disclosure can be applied to the imaging section 12031 or the like. By applying the technique according to the present disclosure to the imaging section 12031 or the like, it becomes possible to reduce power consumption for the imaging section 12031 or the like, which is thus useful for improving fuel efficiency for the vehicle 12100. In addition, by applying the technique according to the present disclosure to the imaging section 12031 or the like, it becomes possible to obtain a clear image for which there is reduced noise, and it is thus possible to provide the driver with a captured image that is easier to see. As a result, it is possible to reduce fatigue for the driver.

### <Example of application example to endoscopic surgery system>

The technique according to the present disclosure (the present technique) can be applied to various products. For example, the technique according to the present disclosure may be applied to an endoscopic surgery system.

FIG. 18 is a view depicting an example of a schematic configuration of an endoscopic surgery system to which the technology according to an embodiment of the present disclosure (present technology) can be applied.

In FIG. 18, a state is illustrated in which a surgeon (medical doctor) 11131 is using an endoscopic surgery system 11000 to perform surgery for a patient 11132 on a patient bed 11133. As depicted, the endoscopic surgery system 11000 includes an endoscope 11100, other surgical tools 11110 such as a pneumoperitoneum tube 11111 and an energy device 11112, a supporting arm apparatus 11120 which supports the endoscope 11100 thereon, and a cart 11200 on which various apparatus for endoscopic surgery are mounted.

The endoscope 11100 includes a lens barrel 11101 having a region of a predetermined length from a distal end thereof to be inserted into a body cavity of the patient 11132, and a camera head 11102 connected to a proximal end of the lens barrel 11101. In the example depicted, the endoscope 11100 is depicted which includes as a rigid endoscope having the lens barrel 11101 of the hard type. However, the endoscope 11100 may otherwise be included as a flexible endoscope having the lens barrel 11101 of the flexible type.

The lens barrel 11101 has, at a distal end thereof, an opening in which an objective lens is fitted. A light source apparatus 11203 is connected to the endoscope 11100 such that light generated by the light source apparatus 11203 is introduced to a distal end of the lens barrel 11101 by a light guide extending in the inside of the lens barrel 11101 and is irradiated toward an observation target in a body cavity of the patient 11132 through the objective lens. It is to be noted that the endoscope 11100 may be a forward-viewing endoscope or may be an oblique-viewing endoscope or a side-viewing endoscope.

An optical system and an image pickup element are provided in the inside of the camera head 11102 such that reflected light (observation light) from the observation target is condensed on the image pickup element by the optical system. The observation light is photo-electrically converted by the image pickup element to generate an electric signal corresponding to the observation light, namely, an image signal corresponding to an observation image. The image signal is transmitted as RAW data to a CCU 11201.

The CCU 11201 includes a central processing unit (CPU), a graphics processing unit (GPU) or the like and integrally controls operation of the endoscope 11100 and a display apparatus 11202. Further, the CCU 11201 receives an image signal from the camera head 11102 and performs, for the image signal, various image processes for displaying an image based on the image signal such as, for example, a development process (demosaic process).

The display apparatus 11202 displays thereon an image based on an image signal, for which the image processes have been performed by the CCU 11201, under the control of the CCU 11201.

The light source apparatus 11203 includes a light source such as, for example, a light emitting diode (LED) and supplies irradiation light upon imaging of a surgical region to the endoscope 11100.

An inputting apparatus 11204 is an input interface for the endoscopic surgery system 11000. A user can perform inputting of various kinds of information or instruction inputting to the endoscopic surgery system 11000 through the inputting apparatus 11204. For example, the user would input an instruction or a like to change an image pickup condition (type of irradiation light, magnification, focal distance or the like) by the endoscope 11100.

A treatment tool controlling apparatus 11205 controls driving of the energy device 11112 for cautery or incision of a tissue, sealing of a blood vessel or the like. A pneumoperitoneum apparatus 11206 feeds gas into a body cavity of the patient 11132 through the pneumoperitoneum tube 11111 to inflate the body cavity in order to secure the field of view of the endoscope 11100 and secure the working space for the surgeon. A recorder 11207 is an apparatus capable of recording various kinds of information relating to surgery. A printer 11208 is an apparatus capable of printing various kinds of information relating to surgery in various forms such as a text, an image or a graph.

It is to be noted that the light source apparatus 11203 which supplies irradiation light when a surgical region is to be imaged to the endoscope 11100 may include a white light source which includes, for example, an LED, a laser light source or a combination of them. Where a white light source includes a combination of red, green, and blue (RGB) laser light sources, since the output intensity and the output timing can be controlled with a high degree of accuracy for each color (each wavelength), adjustment of the white balance of a picked up image can be performed by the light source apparatus 11203. Further, in this case, if laser beams from the respective RGB laser light sources are irradiated time-divisionally on an observation target and driving of the image pickup elements of the camera head 11102 are controlled in synchronism with the irradiation timings. Then images individually corresponding to the R, G and B colors can be also picked up time-divisionally. According to this method, a color image can be obtained even if color filters are not provided for the image pickup element.

Further, the light source apparatus 11203 may be controlled such that the intensity of light to be outputted is changed for each predetermined time. By controlling driving of the image pickup element of the camera head 11102 in synchronism with the timing of the change of the intensity of light to acquire images time-divisionally and synthesizing the images, an image of a high dynamic range free from underexposed blocked up shadows and overexposed highlights can be created.

Further, the light source apparatus 11203 may be configured to supply light of a predetermined wavelength band ready for special light observation. In special light observation, for example, by utilizing the wavelength dependency of absorption of light in a body tissue to irradiate light of a narrow band in comparison with irradiation light upon ordinary observation (namely, white light), narrow band observation (narrow band imaging) of imaging a predetermined tissue such as a blood vessel of a superficial portion of the mucous membrane or the like in a high contrast is performed. Alternatively, in special light observation, fluorescent observation for obtaining an image from fluorescent light generated by irradiation of excitation light may be performed. In fluorescent observation, it is possible to perform observation of fluorescent light from a body tissue by irradiating excitation light on the body tissue (autofluorescence observation) or to obtain a fluorescent light image by locally injecting a reagent such as indocyanine green (ICG) into a body tissue and irradiating excitation light corresponding to a fluorescent light wavelength of the reagent upon the body tissue. The light source apparatus 11203 can be configured to supply such narrowband light and/or excitation light suitable for special light observation as described above.

FIG. 19 is a block diagram depicting an example of a functional configuration of the camera head 11102 and the CCU 11201 depicted in FIG. 18.

The camera head 11102 includes a lens unit 11401, an image pickup unit 11402, a driving unit 11403, a communication unit 11404 and a camera head controlling unit 11405. The CCU 11201 includes a communication unit 11411, an image processing unit 11412 and a control unit 11413. The camera head 11102 and the CCU 11201 are connected for communication to each other by a transmission cable 11400.

The lens unit 11401 is an optical system, provided at a connecting location to the lens barrel 11101. Observation light taken in from a distal end of the lens barrel 11101 is guided to the camera head 11102 and introduced into the lens unit 11401. The lens unit 11401 includes a combination of a plurality of lenses including a zoom lens and a focusing lens.

The number of image pickup elements which is included by the image pickup unit 11402 may be one (single-plate type) or a plural number (multi-plate type). Where the image pickup unit 11402 is configured as that of the multi-plate type, for example, image signals corresponding to respective R, G and B are generated by the image pickup elements, and the image signals may be synthesized to obtain a color image. The image pickup unit 11402 may also be configured so as to have a pair of image pickup elements for acquiring respective image signals for the right eye and the left eye ready for three dimensional (3D) display. If 3D display is performed, then the depth of a living body tissue in a surgical region can be comprehended more accurately by the surgeon 11131. It is to be noted that, where the image pickup unit 11402 is configured as that of stereoscopic type, a plurality of systems of lens units 11401 are provided corresponding to the individual image pickup elements.

Further, the image pickup unit 11402 may not necessarily be provided on the camera head 11102. For example, the image pickup unit 11402 may be provided immediately behind the objective lens in the inside of the lens barrel 11101.

The driving unit 11403 includes an actuator and moves the zoom lens and the focusing lens of the lens unit 11401 by a predetermined distance along an optical axis under the control of the camera head controlling unit 11405. Consequently, the magnification and the focal point of a picked up image by the image pickup unit 11402 can be adjusted suitably.

The communication unit 11404 includes a communication apparatus for transmitting and receiving various kinds of information to and from the CCU 11201. The communication unit 11404 transmits an image signal acquired from the image pickup unit 11402 as RAW data to the CCU 11201 through the transmission cable 11400.

In addition, the communication unit 11404 receives a control signal for controlling driving of the camera head 11102 from the CCU 11201 and supplies the control signal to the camera head controlling unit 11405. The control signal includes information relating to image pickup conditions such as, for example, information that a frame rate of a picked up image is designated, information that an exposure value upon image picking up is designated and/or information that a magnification and a focal point of a picked up image are designated.

It is to be noted that the image pickup conditions such as the frame rate, exposure value, magnification or focal point may be designated by the user or may be set automatically by the control unit 11413 of the CCU 11201 on the basis of an acquired image signal. In the latter case, an auto exposure (AE) function, an auto focus (AF) function and an auto white balance (AWB) function are incorporated in the endoscope 11100.

The camera head controlling unit 11405 controls driving of the camera head 11102 on the basis of a control signal from the CCU 11201 received through the communication unit 11404.

The communication unit 11411 includes a communication apparatus for transmitting and receiving various kinds of information to and from the camera head 11102. The communication unit 11411 receives an image signal transmitted thereto from the camera head 11102 through the transmission cable 11400.

Further, the communication unit 11411 transmits a control signal for controlling driving of the camera head 11102 to the camera head 11102. The image signal and the control signal can be transmitted by electrical communication, optical communication or the like.

The image processing unit 11412 performs various image processes for an image signal in the form of RAW data transmitted thereto from the camera head 11102.

The control unit 11413 performs various kinds of control relating to image picking up of a surgical region or the like by the endoscope 11100 and display of a picked up image obtained by image picking up of the surgical region or the like. For example, the control unit 11413 creates a control signal for controlling driving of the camera head 11102.

Further, the control unit 11413 controls, on the basis of an image signal for which image processes have been performed by the image processing unit 11412, the display apparatus 11202 to display a picked up image in which the surgical region or the like is imaged. Thereupon, the control unit 11413 may recognize various objects in the picked up image using various image recognition technologies. For example, the control unit 11413 can recognize a surgical tool such as forceps, a particular living body region, bleeding, mist when the energy device 11112 is used and so forth by detecting the shape, color and so forth of edges of objects included in a picked up image. The control unit 11413 may cause, when it controls the display apparatus 11202 to display a picked up image, various kinds of surgery supporting information to be displayed in an overlapping manner with an image of the surgical region using a result of the recognition. Where surgery supporting information is displayed in an overlapping manner and presented to the surgeon 11131, the burden on the surgeon 11131 can be reduced and the surgeon 11131 can proceed with the surgery with certainty.

The transmission cable 11400 which connects the camera head 11102 and the CCU 11201 to each other is an electric signal cable ready for communication of an electric signal, an optical fiber ready for optical communication or a composite cable ready for both of electrical and optical communications.

Here, while, in the example depicted, communication is performed by wired communication using the transmission cable 11400, the communication between the camera head 11102 and the CCU 11201 may be performed by wireless communication.

Given above is description regarding an example of an endoscopic surgery system to which the technique according to the present disclosure can be applied. Among the configurations described above, the technique according to the present disclosure can be applied to, inter alia, the image pickup unit 11402 of the camera head 11102, for example. By applying the technique according to the present disclosure to the camera head 11102, it becomes possible to reduce power consumption by the camera head 11102 or the like or the endoscopic surgery system 11000. In addition, by applying the technique according to the present disclosure to the camera head 11102 or the like, it becomes possible to obtain a clear image for which there is reduced noise, and it is thus possible to provide the surgeon with a captured image that is easier to see. As a result, it is possible to reduce fatigue for the surgeon.

Note that description regarding an endoscopic surgery system as an example is given here, but the technique according to the present disclosure may also be applied to, inter alia, a microsurgery system, for example.

Note that, in the present specification, a system means an aggregate of a plurality of components (apparatuses, modules (components), etc.), and it does not matter whether or not all components are within the same case. Accordingly, a plurality of apparatuses that are accommodated in different cases and connected to each other via a network and one apparatus for which a plurality of modules are accommodated in one case are both systems.

In addition, effects described in the present specification are merely examples, there is no limitation to these, and there may be other effects.

Embodiments of the present technique are not limited to the embodiments described above, and various changes are possible in a range that does not deviate from the substance of the present technique.

For example, for the present technique, it is possible to have a cloud computing configuration in which one function is, via a network, shared by a plurality of apparatuses that jointly perform processing.

In addition, it is possible to share and execute individual steps described in the flow charts described above by a plurality of apparatuses in addition to executing individual steps by one apparatus.

Further, in a case where one step includes a plurality of processes, it is possible to share and execute the plurality of processes included in this one step by a plurality of apparatuses, in addition to executing the plurality of processes by one apparatus.

### <Example of configuration combination>

The present technique can also be configured as follows.
(1) An image capturing apparatus including:
   a DNN (Deep Neural Network) processing unit that performs a DNN process on image data generated by image capturing;
   a trigger unit that outputs a trigger signal for controlling stopping or driving of the DNN process; and
   a control unit that, on the basis of the trigger signal, controls stopping or driving for the DNN process and output to a subsequent stage.
(2) The image capturing apparatus according to (1) above, in which,
   in a case where the trigger signal indicates on, the control unit causes the DNN process to be operated and controls output of a result of the DNN process to the subsequent stage.
(3) The image capturing apparatus according to (1) or (2) above, in which,
   in a case where the trigger signal indicates off, the control unit causes the DNN process to be stopped and causes output, to the subsequent stage, of a pre-stop processing result that indicates a result of the DNN process obtained before the DNN process is stopped.
(4) The image capturing apparatus according to (3) above, in which
   the control unit causes the pre-stop processing result to be saved and, while the DNN process is stopped, causes output of the pre-stop processing result to be in synchronization with an output timing for the image data.
(5) The image capturing apparatus according to (1) or (2) above, in which,
   in a case where the trigger signal indicates off, the control unit causes the DNN process to be stopped, and causes information pertaining to stopping of the DNN process to be outputted to the subsequent stage.
(6) The image capturing apparatus according to any one of (1) to (5) above, in which
   the control unit causes a timing of output to the subsequent stage to be in synchronization with an output timing for the image data.
(7) The image capturing apparatus according to any one of (1) to (6) above, in which
   the control unit causes a frame rate for the image capturing to decrease when stopping the DNN process, and
   the control unit returns the frame rate for image capturing to an original value when the DNN process is operated again.
(8) The image capturing apparatus according to any one of (1) to (7) above, in which
   the trigger unit outputs the trigger signal on the basis of a signal that indicates a characteristic of the image data.
(9) The image capturing apparatus according to (8) above, in which
   the signal that indicates the characteristic of the image data is a signal that indicates whether or not a luminance value of the image data continues to exceed a predetermined luminance value.
(10) The image capturing apparatus according to (8) above, in which
   the signal that indicates the characteristic of the image data is a signal that indicates whether or not a feature amount of the image data is separated by a predetermined amount from a feature amount of an image used when the DNN process is trained.
(11) The image capturing apparatus according to (8) above, in which
   the signal that indicates the characteristic of the image data is a signal obtained from a signal processing unit that executes signal processing on the image data.
(12) The image capturing apparatus according to any one of (1) to (11) above, in which
   the trigger unit outputs the trigger signal on the basis of a signal that indicates a change in luminance of each pixel of an image sensor.
(13) The image capturing apparatus according to (12) above, in which
   the signal that indicates the change in luminance of each pixel of the image sensor is a signal obtained from an external sensor.
(14) The image capturing apparatus according to (13) above, in which
   the trigger unit receives, asynchronously with respect to a timing of the image capturing, the signal obtained from the external sensor.
(15) The image capturing apparatus according to any one of (1) to (14) above, in which
   the DNN process includes a process that uses a trained learning model to detect an object from the image data.
(16) A signal processing method including:
   by an image capturing apparatus,
   performing a DNN (Deep Neural Network) process on image data generated by image capturing;
   outputting a trigger signal for controlling stopping or driving of the DNN process; and
   controlling, on the basis of the trigger signal, stopping or driving for the DNN process and output to a subsequent stage.

### [Reference Signs List]

1, 1A, 1B: Image capturing apparatus
2: Cloud server
3: Event-based sensor
11, 11A, 11B: Image sensor
12: Application processor
21: Image capturing unit
22A, 22B, 22: Trigger unit
23A, 23B, 23: Control unit
24A, 24B, 24: Signal processing unit
25: DSP
26: Memory
27: Selector
31: Optical system
32: Pixel array section
33: ADC
42: Processing buffer
43: Processing result saving unit

## Claims

1. An image capturing apparatus comprising:
a DNN (Deep Neural Network) processing unit that performs a DNN process on image data generated by image capturing;
a trigger unit that outputs a trigger signal for controlling stopping or driving of the DNN process; and
a control unit that, on a basis of the trigger signal, controls stopping or driving for the DNN process and output to a subsequent stage.

2. The image capturing apparatus according to claim 1, wherein,
in a case where the trigger signal indicates on, the control unit causes the DNN process to be operated and controls output of a result of the DNN process to the subsequent stage.

3. The image capturing apparatus according to claim 2, wherein,
in a case where the trigger signal indicates off, the control unit causes the DNN process to be stopped and causes output, to the subsequent stage, of a pre-stop processing result that indicates a result of the DNN process obtained before the DNN process is stopped.

4. The image capturing apparatus according to claim 3, wherein
the control unit causes the pre-stop processing result to be saved and, while the DNN process is stopped, causes output of the pre-stop processing result to be in synchronization with an output timing for the image data.

5. The image capturing apparatus according to claim 2, wherein,
in a case where the trigger signal indicates off, the control unit causes the DNN process to be stopped, and causes information pertaining to stopping of the DNN process to be outputted to the subsequent stage.

6. The image capturing apparatus according to claim 1, wherein
the control unit causes a timing of output to the subsequent stage to be in synchronization with an output timing for the image data.

7. The image capturing apparatus according to claim 1, wherein
the control unit causes a frame rate for the image capturing to decrease when stopping the DNN process, and
the control unit returns the frame rate for image capturing to an original value when the DNN process is operated again.

8. The image capturing apparatus according to claim 1, wherein
the trigger unit outputs the trigger signal on a basis of a signal that indicates a characteristic of the image data.

9. The image capturing apparatus according to claim 8, wherein
the signal that indicates the characteristic of the image data is a signal that indicates whether or not a luminance value of the image data continues to exceed a predetermined luminance value.

10. The image capturing apparatus according to claim 8, wherein
the signal that indicates the characteristic of the image data is a signal that indicates whether or not a feature amount of the image data is separated by a predetermined amount from a feature amount of an image used when the DNN process is trained.

11. The image capturing apparatus according to claim 8, wherein
the signal that indicates the characteristic of the image data is a signal obtained from a signal processing unit that executes signal processing on the image data.

12. The image capturing apparatus according to claim 1, wherein
the trigger unit outputs the trigger signal on a basis of a signal that indicates a change in luminance of each pixel of an image sensor.

13. The image capturing apparatus according to claim 12, wherein
the signal that indicates the change in luminance of each pixel of the image sensor is a signal obtained from an external sensor.

14. The image capturing apparatus according to claim 13, wherein
the trigger unit receives, asynchronously with respect to a timing of the image capturing, the signal obtained from the external sensor.

15. The image capturing apparatus according to claim 1, wherein
the DNN process includes a process that uses a trained learning model to detect an object from the image data.

16. A signal processing method comprising:
by an image capturing apparatus,
performing a DNN (Deep Neural Network) process on image data generated by image capturing;
outputting a trigger signal for controlling stopping or driving of the DNN process; and
controlling, on a basis of the trigger signal, stopping or driving for the DNN process and output to a subsequent stage.
